# EUROPEAN PATENT SPECIFICATION

(11) **EP 4 020 233 B1**
(45) Date of publication and mention of the grant of the patent: **17.04.2024**
(21) Application number: 21197909.1
(22) Date of filing: 21.09.2021
(51) Int. Cl.: G06F 12/1027, G06F 12/127

(54) **AUTOMATED TRANSLATION LOOKASIDE BUFFER SET REBALANCING**
AUTOMATISCHER NEUABGLEICH EINES ÜBERSETZUNGS-LOOKASIDE-PUFFERSATZES
RÉÉQUILIBRAGE AUTOMATISÉ D'UN ENSEMBLE DE MÉMOIRE CACHE DE TRADUCTION D'ADRESSES

(30) Priority: 26.12.2020 US 202017134392
(43) Date of publication of application: 29.06.2022
(73) Proprietor: INTEL Corporation, Santa Clara, CA 95054 (US)
(72) Inventor: Keppel, David Pardo, Mountain View CA, 94040 (US)
(74) Representative: Samson & Partner Patentanwälte mbB

(56) References cited:
- US-A1- 2008 282 055
- US-A1- 2009 119 477
- US-A1- 2010 106 938
- US-A1- 2019 227 947

## Description

### Background

This disclosure relates to efficient set rebalancing in a translation lookaside buffer (TLB) that contains a configurable sub-TLB that is configurable to hold different page size sets at different times after boot and a fixed sub-TLB that holds a fixed page size set after boot.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be noted that these statements are to be read in this light, and not as admissions of any kind.

Integrated circuits are found in numerous electronic devices, from handheld devices, computers, gaming systems, robotic devices, automobiles, and more. Some integrated circuits, such as microprocessors, process data retrieved from memory. While the data is stored in a physical memory address representing an actual location in the memory, software running on the integrated circuit may operate using a virtual memory address that is translated to the physical memory address when the memory is accessed. A structure on the integrated circuit known as a translation lookaside buffer (TLB) may reduce the time taken to access a memory location by storing recently used mappings of virtual memory addresses to their corresponding physical memory addresses. Virtual-to-physical translation is done using "pages," where typical x86 page sizes are 4 kibibyte (4KiB), 2 mebibyte (2MiB), or 1 gibibyte (1GiB). The TLB entry for a page covers a range of addresses, corresponding to the page size. For example, if the TLB stores translation for a 2MiB page then there is a range of 2M virtual addresses which may be translated by the same TLB entry. When software running on the integrated circuit requests access to a particular virtual memory address that is on a page that was recently used and that is stored in the TLB, the TLB may rapidly translate the virtual memory address to its corresponding physical memory address.

In this way, the TLB may operate as a cache of mappings from virtual memory addresses to physical memory addresses. When a mapping is requested that is currently stored in the TLB, this may be referred to as a "cache hit" or "TLB hit." When the TLB does not currently have the requested mapping, however, this may be referred to as a "cache miss" or "TLB miss." The requested mapping may first be loaded into the TLB before translation occurs. Some software applications may lose significant running time to TLB misses.

One way to reduce TLB misses involves increasing the size of the TLB. Many software applications may touch many pages of memory with poor reference locality, however, making it infeasible to build a "never miss" TLB. Further, a larger hardware structure may have a higher hit rate but slower access time, leading to a net loss of performance. Other ways to reduce miss rates may involve using TLB entries of different page sizes. Unfortunately, the memory use cases that provide performance advantages with this structure may be difficult to realize. Moreover, solutions such as sharing a single sub-TLB of a particular size often introduces non-trivial conflicts or competition that may introduce additional latency due to TLB misses. US 2019/0227947 A1 shows a processor including a translation lookaside buffer which may utilize multiple sub-TLBs. Each sub-TLB may be configurable to support a range of page sizes. TLB usage may be monitored. Configuration may occur at boot time, subsequently by an application or based on usage patterns. The present disclosure provides an integrated circuit comprising a translation lookaside buffer according to claim 1 and a method for operating the integrated circuit according to claim 9.

### Brief Description of the Drawings

Various aspects of this disclosure may be better understood upon reading the following detailed description and upon reference to the drawings in which:
FIG. 1 is a block diagram of a register architecture, in accordance with an embodiment;
FIG. 2A is a block diagram illustrating an in-order pipeline and a register renaming, out-of-order issue/execution pipeline, in accordance with an embodiment;
FIG. 2B is a block diagram illustrating an in-order architecture core and a register renaming, out-of-order issue/execution architecture core to be included in a processor, in accordance with an embodiment;
FIGS. 3A and 3B illustrate a block diagram of a more specific example in-order core architecture, which core would be one of several logic blocks (including other cores of the same type and/or different types) in a chip, in accordance with an embodiment;
FIG. 4 is a block diagram of a processor that may have more than one core, may have an integrated memory controller, and may have integrated graphics, in accordance with an embodiment;
FIG. 5 shown a block diagram of a system, in accordance with an embodiment;
FIG. 6 is a block diagram of a first more specific example system, in accordance with an embodiment;
FIG. 7 is a block diagram of a second more specific example system, in accordance with an embodiment;
FIG. 8 is a block diagram of a system on a chip (SoC), in accordance with an embodiment;
FIG. 9 is a block diagram contrasting the use of a software instruction converter to convert binary instructions in a source instruction set to binary instructions in a target instruction set, in accordance with an embodiment;
FIG. 10 is a block diagram illustrating the operation of a translation lookaside buffer (TLB) when a requested TLB entry is presently stored in the TLB (a "TLB hit"), in accordance with an embodiment;
FIG. 11 is a block diagram illustrating the operation of the TLB when a requested TLB entry is not presently stored in the TLB (a "TLB miss"), in accordance with an embodiment;
FIG. 12 is a block diagram of a TLB that holds TLB entries corresponding to multiple memory page sizes using a first fixed set-associative sub-TLB holding entries corresponding to a first page size, a second fixed set-associative sub-TLB holding entries corresponding to a second page size, a third fixed set-associative sub-TLB holding entries corresponding to a third page size, and the configurable fully associative sub-TLB holding entries corresponding to all three page sizes, in accordance with an embodiment;
FIG. 13 is a block diagram of a TLB that holds TLB entries corresponding to multiple memory page sizes using a first fixed set-associative sub-TLB holding entries corresponding to the first page size, a second fixed set-associative sub-TLB holding entries corresponding to the second page size, and the configurable fully associative sub-TLB holding entries corresponding to all three page sizes, in accordance with an embodiment;
FIG. 14 is a block diagram of a TLB that holds TLB entries corresponding to multiple memory page sizes using a first fixed set-associative sub-TLB holding entries corresponding to the second page size, a second fixed set-associative sub-TLB holding entries corresponding to the third page size, and the configurable fully associative sub-TLB holding entries corresponding to all three page sizes, in accordance with an embodiment;
FIG. 15 is a block diagram of a TLB that holds TLB entries corresponding to multiple memory page sizes using a first fixed set-associative sub-TLB holding entries corresponding to the first page size, a second fixed set-associative sub-TLB holding entries corresponding to the third page size, and the configurable fully associative sub-TLB holding entries corresponding to all three page sizes, in accordance with an embodiment;
FIG. 16 is a block diagram of illustrating TLB entries of a TLB having one or more fixed set-associative sub-TLBs and the configurable fully associative sub-TLB, in accordance with an embodiment;
FIG. 17 is a flowchart of a method for evicting and replacing old TLB entries with new TLB entries in a TLB having one or more fixed set-associative sub-TLBs and the configurable fully associative sub-TLB, in accordance with an embodiment;
FIG. 18 is a block diagram illustrating a decision for evicting and replacing old TLB entries with new TLB entries in a TLB having one or more fixed set-associative sub-TLBs and the configurable fully associative sub-TLB, in accordance with an embodiment;
FIG. 19 is a block diagram of a TLB that counts sub-TLB miss rates, in accordance with an embodiment;
FIG. 20 is a flowchart of a method for selecting a sub-TLB to use to replace an old TLB entry with a new TLB entry, in accordance with an embodiment;
FIG. 21 is a flowchart of another method for selecting a sub-TLB to use to replace an old TLB entry with a new TLB entry, in accordance with an embodiment;
FIG. 22 is a flowchart of another method for selecting a sub-TLB to use to replace an old TLB entry with a new TLB entry, in accordance with an embodiment;
FIG. 23 is a block diagram illustrating the selection of a sub-TLB to use to replace an old TLB entry with a new TLB entry using a "coin toss" approach, in accordance with an embodiment;
FIG. 24 is a flowchart of a method for selecting a TLB entry to evict and replace with a new TLB entry in the configurable fully associative sub-TLB, in accordance with an embodiment;
FIG. 25 is a block diagram of a TLB that defines certain TLB entries of the configurable fully associative sub-TLB as "sticky" and reserved for TLB entries corresponding to a particular page size, in accordance with an embodiment;
FIG. 26 is a flowchart of a method for marking certain TLB entries of the configurable fully associative sub-TLB as "sticky" and reserved for TLB entries corresponding to a particular page size, in accordance with an embodiment;
FIG. 27 is a flowchart of another method for marking certain TLB entries of the configurable fully associative sub-TLB as "sticky" and reserved for TLB entries corresponding to a particular page size, in accordance with an embodiment;
FIG. 28 is a block diagram of a TLB that counts the number of times a TLB entry of a particular page size is stored in an entry in the configurable fully associative sub-TLB, in accordance with an embodiment;
FIG. 29 is a flowchart of a method for marking certain TLB entries of the configurable fully associative sub-TLB as "sticky" based on the count of FIG. 28, in accordance with an embodiment;
FIG. 30 is a block diagram of a TLB that counts the number of times a TLB entry of a particular page size is stored in any entry in the configurable fully associative sub-TLB, in accordance with an embodiment;
FIG. 31 is a flowchart of a method for marking certain TLB entries of the configurable fully associative sub-TLB as "sticky" based on the count of FIG. 30, in accordance with an embodiment;
FIG. 32 is a block diagram of a TLB that counts a total number of TLB requests or clock cycles to determine when to mark certain TLB entries of the configurable fully associative sub-TLB as "sticky," in accordance with an embodiment;
FIG. 33 is a flowchart of a method for marking certain TLB entries of the configurable fully associative sub-TLB as "sticky" based on the count of FIG. 32, in accordance with an embodiment;
FIG. 34 is a flowchart of a method for resetting certain TLB entries of the configurable fully associative sub-TLB from "sticky" in response to a context switch, in accordance with an embodiment;
FIG. 35 is a flowchart of a method for resetting certain TLB entries of the configurable fully associative sub-TLB from "sticky" in response to explicit invalidation of a sticky sub-TLB entry, in accordance with an embodiment;
FIG. 36 is a flowchart of a method for resetting certain TLB entries of the configurable fully associative sub-TLB from "sticky" after a threshold amount of times or TLB requests, in accordance with an embodiment;
FIG. 37 is a flowchart of a method for resetting certain TLB entries of the configurable fully associative sub-TLB from "sticky" upon a subsequent attempted eviction (a "second chance" approach), in accordance with an embodiment; and
FIG. 38 is a block diagram of a data structure that may represent a TLB entry in the configurable fully associative sub-TLB, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "including" and "having" are intended to be inclusive and mean that there may be additional elements other than the listed elements. Additionally, it should be understood that references to "some embodiments," "embodiments," "one embodiment," or "an embodiment" of the present disclosure are not intended to be interpreted as excluding the existence of additional embodiments that also incorporate the recited features. Furthermore, the phrase A "based on" B is intended to mean that A is at least partially based on B. Moreover, the term "or" is intended to be inclusive (e.g., logical OR) and not exclusive (e.g., logical XOR). In other words, the phrase A "or" B is intended to mean A, B, or both A and B. Moreover, this disclosure describes various data structures, such as instructions for an instruction set architecture. These are described as having certain domains (e.g., fields) and corresponding numbers of bits. However, it should be understood that these domains and sizes in bits are meant as examples and are not intended to be exclusive. Indeed, the data structures (e.g., instructions) of this disclosure may take any suitable form.

As noted above, integrated circuits are found in numerous electronic devices, from handheld devices, computers, gaming systems, robotic devices, automobiles, and more. Some integrated circuits, such as microprocessors, process data retrieved from memory. While the data is stored in a physical memory address representing an actual location in the memory, software running on the integrated circuit may operate using a virtual memory address that is translated to the physical memory address when the memory is accessed. A structure on the integrated circuit known as a translation lookaside buffer (TLB) may reduce the time taken to access a memory location by storing recently used mappings of virtual memory addresses to their corresponding physical memory addresses. Virtual-to-physical translation is done using "pages," where typical x86 page sizes are 4 kibibyte (4KiB), 2 mebibyte (2MiB), or 1 gibibyte (1GiB). The TLB entry for a page covers a range of addresses, corresponding to the page size. For example, if the TLB stores translation for a 2MiB page then there is a range of 2MiB virtual addresses which may be translated by the same TLB entry. When data utilization circuitry (e.g., processing circuitry running software on the integrated circuit) requests access to a particular virtual memory address that is on a page that was recently used and that is stored in the TLB, the TLB may rapidly translate the virtual memory address to its corresponding physical memory address.

In this way, the TLB may operate as a cache of mappings of pages of virtual memory addresses to physical memory addresses. When a virtual-to-physical address mapping is requested that may be found on a particular page that is currently stored in an entry of the TLB, this may be referred to as a "cache hit" or "TLB hit." When the TLB does not currently have the requested mapping, however, this may be referred to as a "cache miss" or "TLB miss." The requested mapping may first be loaded into the TLB before translation occurs. Some software applications may lose significant running time to TLB misses, so reducing the number of TLB misses may increase the rate at which the TLB can respond to TLB requests.

Rather than simply increasing the size of the TLB to reduce the odds of a TLB miss-which could take up a substantial amount of valuable die area of the integrated circuit - a TLB may have several sub-TLBs that handle specific TLB requests corresponding to specific page sizes of memory. In particular, different software applications may use memory of page tables in a variety of sizes (e.g., 4 kibibyte (4KiB), 2 mebibyte (2MiB), or 1 gibibyte (1GiB)). These will be referred to below as 4K, 2M, and 1G, respectively. These are size ratios of 512x - e.g., 2 MiB is 512x larger than 4 KiB. Under certain conditions, a larger page size may be used in place of the next smaller size. This removes about 500x page mappings and so reduces competition for TLB space. For example, if an application touching 100,000x 4 KiB pages can be promoted to use 2 MiB pages, then a TLB needs only about 200 TLB entries and this application will rarely take a TLB miss and will therefore run much faster.

Even so, some software applications may access memory primarily via 4K page size and may not use 1G page sizes at all. Other software applications may access memory primarily via 2M page size and may not use memory of the 4K page size. It therefore may be difficult to predict the memory usage pattern that would allow the TLB to operate most efficiently.

In this disclosure, a TLB may reduce the likelihood of a TLB miss using a configurable sub-TLB that is configurable to hold different page size sets at different times after boot to complement a fixed sub-TLB that holds a fixed page size set after boot. As used herein, a page size set represents a set of page sizes (which could be a single page size (e.g., 4K, 2M, 1G) or two or more page sizes (e.g., 4K+2M, 2M+1G, 4K+1G, 4K+2M+1G)) that can be accommodated by a sub-TLB. As discussed below, the number of pages in a page size set used by a configurable sub-TLB may change during runtime (e.g., a configurable fully associative sub-TLB may be reconfigurable at different times during runtime to hold 1G TLB entries, 1G+2M, 1G+4K, 1G+2M+4K).

A fixed sub-TLB is a sub-TLB that may only hold one page size set after boot. Some fixed sub-TLBs may be fixed at design time, while others may be fixed at boot. In any case, a fixed sub-TLB may not be reconfigured dynamically after boot to hold a different page size set. In one example, a fixed sub-TLB may be a sub-TLB that is defined to hold a fixed page size set of 4K page size; during runtime, this fixed sub-TLB may hold 4K TLB entries but not 2M or 1G TLB entries. In another example, a fixed sub-TLB may be a sub-TLB that is defined to hold a fixed page size set of 4K and 2M page sizes; during runtime, this fixed sub-TLB may hold 4K and 2M TLB entries but not 1G TLB entries. In a further example, a fixed sub-TLB may be a sub-TLB that is defined to hold a page size set of 2M and 1G page sizes; during runtime, this fixed sub-TLB may hold 2M and 1G TLB entries, but not 4K TLB entries. Once the page size set to be used by the fixed sub-TLB is fixed (e.g., at design, at manufacture, at deployment in the field, at boot), the fixed sub-TLB may not hold TLB entries of a different page size than found in the fixed page size set.

By contrast, a configurable sub-TLB is a portion of a TLB that can be dynamically configured after boot to hold TLB entries of more than one page size set. In this way, the configurable sub-TLB may accommodate changing memory usage during operation. Examples of configurable sub-TLBs include a configurable set-associative sub-TLB or a configurable fully associative sub-TLB. A configurable set-associative sub-TLB may support TLB entries corresponding to one specific page size set of memory at any one time, but may be dynamically configured (e.g., configured initially or reconfigured from an initial configuration) after boot to change which page size set is held by the configurable set-associative sub-TLB (e.g., only 4K entries at a first time, only 2M entries at a second time, only 1G entries at a third time). Some configurable set-associative sub-TLBs may be configurable to hold multiple page sizes at any one time and which of those multiple page sizes is configured to be contained in the page size set may be dynamically configured after boot (e.g., 4K and 2M, 4K and 1G, 2M and 1G) as memory usage conditions change during operation. For example, a fully-associative sub-TLB may support 4K/2M/1G pages at one time but then be reconfigured to support only 1G pages; or a 2-size set-associative configurable sub-TLB may be configured at one time to support 4K+1G pages and at another time to support 2M+1G pages. A fully associative sub-TLB may support TLB entries corresponding to multiple specific page sizes of memory (e.g., 4K, 2M, and 1G). A configurable sub-TLB may provide additional flexibility for different use cases having different memory size usage but may involve more overhead than a fixed-set sub-TLB.

The difference between a fixed sub-TLB and a configurable sub-TLB may be further explained by the following example. Consider a sub-TLB that may have 1536x entries that hold any mix of 4K and 2M pages. Such a sub-TLB may be considered a fixed sub-TLB because it can handle a fixed page size set consisting of 4K and 2M page sizes. This is "fixed" even though the sub-TLB may be able to handle a page size set of two page sizes. Note that 1536=1024+512. One "configurable" option would be to build two sub-TLBs, one handling a first page size set with 1024x fixed 4K+2M sizes, and a second handling a second page size set with 512x configurable entries that can be configured at different times to hold any two of the sizes (e.g., 4K+2M, 4K+1G, 2M+1G).

The combination of a fixed sub-TLB and a configurable sub-TLB may allow size assignments to be made dynamically at run-time rather than at build-time. In this way, resources can be directed toward the page sizes with the highest miss rates. For example, if entries of 4K page sizes are most in demand, a configurable set-associative sub-TLB may be configured to hold entries of a page size set that includes a 4K page size (e.g., rather than 2M or 1G) or the configurable fully associative sub-TLB may accommodate more 4K TLB entries and fewer 2M or 1G TLB entries. In another example, a configurable set-associative sub-TLB While this disclosure provides many examples relating to dynamic allocation of entries of specific page sizes involving the configurable fully associative sub-TLB and one or more fixed set-associative sub-TLBs, it should be understood that any other suitable types of fixed or configurable sub-TLBs may be used. For example, configurable set-associative sub-TLBs may be used (e.g., in place of the configurable fully associative sub-TLB or in place of one or more of the fixed set-associative sub-TLBs).

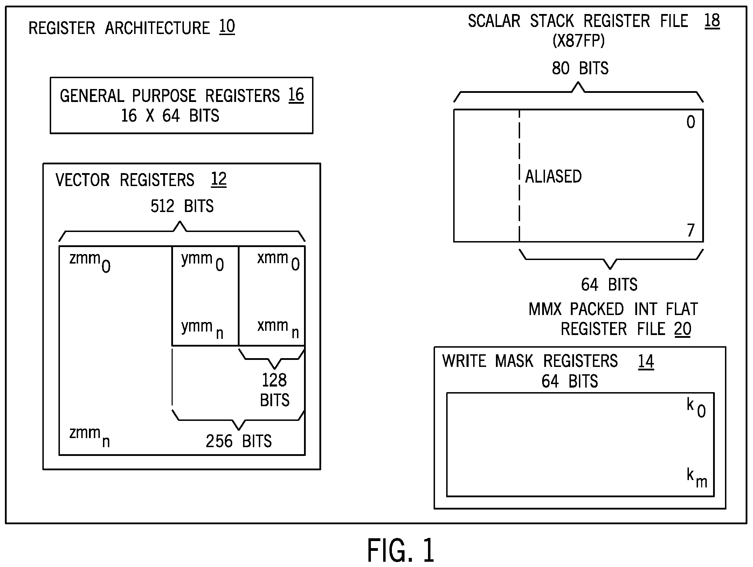

These features may be used in any suitable integrated circuit devices, including microprocessors, application-specific integrated circuits (ASICs), or field programmable gate arrays (FPGAs). The following architecture discussed below with respect to FIGS. 1-9 is intended to represent one example that may be used.

### Register Architecture

FIG. 1 is a block diagram of a register architecture 10, in accordance with an embodiment. In the embodiment illustrated, there are a number (e.g., 32) of vector registers 12 that may be a number (e.g., 512) of bits wide. In the register architecture 10; these registers are referenced as zmm0 through zmmᵢ. The lower order (e.g., 256) bits of the lower n (e.g., 16) zmm registers are overlaid on corresponding registers ymm. The lower order (e.g., 128 bits) of the lower n zmm registers that are also the lower order n bits of the ymm registers are overlaid on corresponding registers xmm.

Write mask registers 14 may include m (e.g., 8) write mask registers (k0 through km), each having a number (e.g., 64) of bits. Additionally or alternatively, at least some of the write mask registers 14 may have a different size (e.g., 16 bits). At least some of the vector mask registers 12 (e.g., k0) are prohibited from being used as a write mask. When such vector mask registers are indicated, a hardwired write mask (e.g., 0xFFFF) is selected and, effectively disabling write masking for that instruction.

General-purpose registers 16 may include a number (e.g., 16) of registers having corresponding bit sizes (e.g., 64) that are used along with x86 addressing modes to address memory operands. These registers may be referenced by the names RAX, RBX, RCX, RDX, RBP, RSI, RDI, RSP, and R8 through R15. Parts (e.g., 32 bits of the registers) of at least some of these registers may be used for modes (e.g., 32-bit mode) that is shorter than the complete length of the registers.

Scalar floating-point stack register file (x87 stack) 18 has an MMX packed integer flat register file 20 is aliased. The x87 stack 18 is an eight-element (or other number of elements) stack used to perform scalar floating-point operations on floating point data using the x87 instruction set extension. The floating-point data may have various levels of precision (e.g., 16, 32, 64, 80, or more bits). The MMX packed integer flat register files 20 are used to perform operations on 64-bit packed integer data, as well as to hold operands for some operations performed between the MMX packed integer flat register files 20 and the XMM registers.

Alternative embodiments may use wider or narrower registers. Additionally, alternative embodiments may use more, less, or different register files and registers.

### Core Architectures, Processors, and Computer Architectures

Processor cores may be implemented in different ways, for different purposes, and in different processors. For instance, implementations of such cores may include: 1) a general purpose in-order core suitable for general-purpose computing; 2) a high performance general purpose out-of-order core suitable for general-purpose computing; 3) a special purpose core suitable for primarily for graphics and/or scientific (throughput) computing. Implementations of different processors may include: 1) a CPU including one or more general purpose in-order cores suitable for general-purpose computing and/or one or more general purpose out-of-order cores suitable for general-purpose computing; and 2) a coprocessor including one or more special purpose cores primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Example core architectures are described next, followed by descriptions of example processors and computer architectures.

### In-Order and Out-of-Order Core Architecture

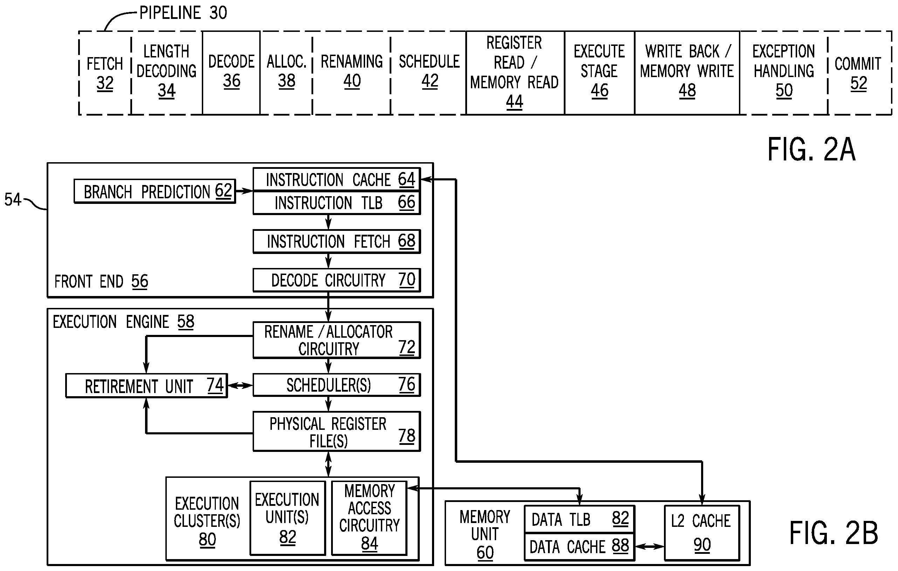

FIG. 2A is a block diagram illustrating an in-order pipeline and a register renaming, out-of-order issue/execution pipeline according to an embodiment of the disclosure.

FIG. 2B is a block diagram illustrating both an embodiment of an in-order architecture core and an example register renaming, out-of-order issue/execution architecture core to be included in a processor according to embodiments. The solid lined boxes in FIGS. 2A and 2B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 2A, a pipeline 30 in the processor includes a fetch stage 32, a length decode stage 34, a decode stage 36, an allocation stage 38, a renaming stage 40, a scheduling (also known as a dispatch or issue) stage 42, a register read/memory read stage 44, an execute stage 46, a write back/memory write stage 48, an exception handling stage 50, and a commit stage 52.

FIG. 2B shows a processor core 54 including a front-end unit 56 coupled to an execution engine unit 58, and both are coupled to a memory unit 60. The processor core 54 may be a reduced instruction set computing (RISC) core, a complex instruction set computing (CISC) core, a very long instruction word (VLIW) core, or a hybrid or alternative core type. As yet another option, the processor core 54 may be a special-purpose core, such as, for example, a network or communication core, compression engine, coprocessor core, general purpose computing graphics processing unit (GPGPU) core, graphics core, or the like.

The front-end unit 56 includes a branch prediction unit 62 coupled to an instruction cache unit 64 that is coupled to an instruction translation lookaside buffer (TLB) 66. The TLB 66 is coupled to an instruction fetch unit 68. The instruction fetch unit 68 is coupled to a decode circuitry 70. The decode circuitry 70 (or decoder) may decode instructions and generate as an output one or more micro-operations, micro-code entry points, microinstructions, other instructions, or other control signals, which are decoded from, or which otherwise reflect, or are derived from, the original instructions. The decode circuitry 70 may be implemented using various different mechanisms. Examples of suitable mechanisms include, but are not limited to, look-up tables, hardware implementations, programmable logic arrays (PLAs), microcode read only memories (ROMs), etc. The processor core 54 may include a microcode ROM or other medium that stores microcode for macroinstructions (e.g., in decode circuitry 70 or otherwise within the front-end unit 56). The decode circuitry 70 is coupled to a rename/allocator unit 72 in the execution engine unit 58.

The execution engine unit 58 includes a rename/allocator unit 72 coupled to a retirement unit 74 and a set of one or more scheduler unit(s) 76. The scheduler unit(s) 76 represents any number of different schedulers, including reservations stations, central instruction window, etc. The scheduler unit(s) 76 is coupled to physical register file(s) unit(s) 78. Each of the physical register file(s) unit(s) 78 represents one or more physical register files storing one or more different data types, such as scalar integers, scalar floating points, packed integers, packed floating points, vector integers, vector floating points, statuses (e.g., an instruction pointer that is the address of the next instruction to be executed), etc. In one embodiment, the physical register file(s) unit(s) 78 includes the vector registers 12, the write mask registers 14, and/or the x87 stack 18. These register units may provide architectural vector registers, vector mask registers, and general-purpose registers. The physical register file(s) unit(s) 78 is overlapped by the retirement unit 74 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.).

The retirement unit 74 and the physical register file(s) unit(s) 78 are coupled to an execution cluster(s) 80. The execution cluster(s) 80 includes a set of one or more execution units 82 and a set of one or more memory access circuitries 84. The execution units 82 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform multiple different functions. The scheduler unit(s) 76, physical register file(s) unit(s) 78, and execution cluster(s) 80 are shown as being singular or plural because some processor cores 54 create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster. In the case of a separate memory access pipeline, a processor core 54 for the separate memory access pipeline is the only the execution cluster 80 that has the memory access circuitry 84). It should also be understood that where separate pipelines are used, one or more of these pipelines may be out-of-order issue/execution and the rest perform in-order execution.

The set of memory access circuitry 84 is coupled to the memory unit 60. The memory unit 60 includes a data TLB unit 86 coupled to a data cache unit 88 coupled to a level 2 (L2) cache unit 90. The memory access circuitry 84 may include a load unit, a store address unit, and a store data unit, each of which is coupled to the data TLB unit 86 in the memory unit 60. The instruction cache unit 64 is further coupled to the level 2 (L2) cache unit 90 in the memory unit 60. The L2 cache unit 90 is coupled to one or more other levels of caches and/or to a main memory.

By way of example, the register renaming, out-of-order issue/execution core architecture may implement the pipeline 30 as follows: 1) the instruction fetch unit 68 performs the fetch and length decoding stages 32 and 34 of the pipeline 30; 2) the decode circuitry 70 performs the decode stage 36 of the pipeline 30; 3) the rename/allocator unit 72 performs the allocation stage 38 and renaming stage 40 of the pipeline; 4) the scheduler unit(s) 76 performs the schedule stage 42 of the pipeline 30; 5) the physical register file(s) unit(s) 78 and the memory unit 60 perform the register read/memory read stage 44 of the pipeline 30; the execution cluster 80 performs the execute stage 46 of the pipeline 30; 6) the memory unit 60 and the physical register file(s) unit(s) 78 perform the write back/memory write stage 48 of the pipeline 30; 7) various units may be involved in the exception handling stage 50 of the pipeline; and/or 8) the retirement unit 74 and the physical register file(s) unit(s) 78 perform the commit stage 52 of the pipeline 30.

The processor core 54 may support one or more instructions sets, such as an x86 instruction set (with or without additional extensions for newer versions); a MIPS instruction set of MIPS Technologies of Sunnyvale, CA; an ARM instruction set (with optional additional extensions such as NEON) of ARM Holdings of Sunnyvale, CA). Additionally or alternatively, the processor core 54 includes logic to support a packed data instruction set extension (e.g., AVX1, AVX2), thereby allowing the operations used by multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof, such as a time-sliced fetching and decoding and simultaneous multithreading in INTEL^{®} Hyperthreading technology.

While register renaming is described in the context of out-of-order execution, register renaming may be used in an in-order architecture. While the illustrated embodiment of the processor also includes a separate instruction cache unit 64, a separate data cache unit 88, and a shared L2 cache unit 90, some processors may have a single internal cache for both instructions and data, such as, for example, a Level 1 (L1) internal cache, or multiple levels of the internal cache. In some embodiments, the processor may include a combination of an internal cache and an external cache that is external to the processor core 54 and/or the processor. Alternatively, some processors may use a cache that is external to the processor core 54 and/or the processor.

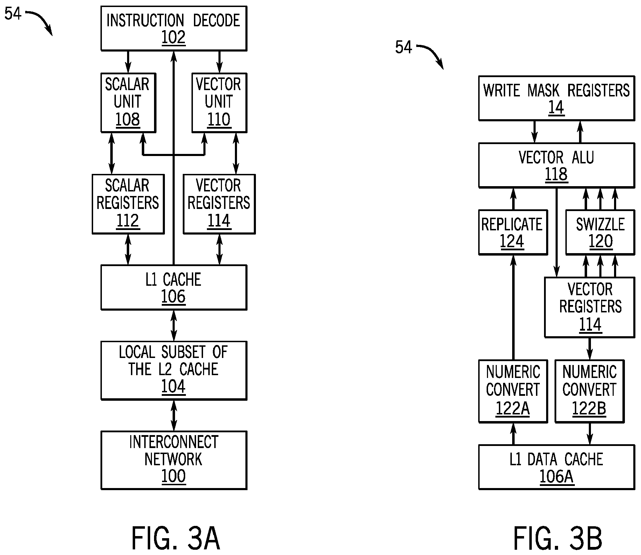

FIGS. 3A and 3B illustrate more detailed block diagrams of an in-order core architecture. The processor core 54 includes one or more logic blocks (including other cores of the same type and/or different types) in a chip. The logic blocks communicate through a high-bandwidth interconnect network (e.g., a ring network) with some fixed function logic, memory I/O interfaces, and other I/O logic, depending on the application.

FIG. 3A is a block diagram of a single processor core 54, along with its connection to an on-die interconnect network 100 and with its local subset of the Level 2 (L2) cache 104, according to embodiments of the disclosure. In one embodiment, an instruction decoder 102 supports the x86 instruction set with a packed data instruction set extension. An L1 cache 106 allows low-latency accesses to cache memory into the scalar and vector units. While in one embodiment (to simplify the design), a scalar unit 108 and a vector unit 110 use separate register sets (respectively, scalar registers 112 (e.g., x87 stack 18) and vector registers 114 (e.g., vector registers 12) and data transferred between them is written to memory and then read back in from a level 1 (L1) cache 106, alternative embodiments of the disclosure may use a different approach (e.g., use a single register set or include a communication path that allow data to be transferred between the two register files without being written and read back).

The local subset of the L2 cache 104 is part of a global L2 cache unit 90 that is divided into separate local subsets, one per processor core. Each processor core 54 has a direct access path to its own local subset of the L2 cache 104. Data read by a processor core 54 is stored in its L2 cache 104 subset and can be accessed quickly, in parallel with other processor cores 54 accessing their own local L2 cache subsets. Data written by a processor core 54 is stored in its own L2 cache 104 subset and is flushed from other subsets, if necessary. The interconnection network 100 ensures coherency for shared data. The interconnection network 100 is bi-directional to allow agents such as processor cores, L2 caches, and other logic blocks to communicate with each other within the chip. Each data-path may have a number (e.g.,1012) of bits in width per direction.

FIG. 3B is an expanded view of part of the processor core in FIG. 3A according to embodiments of the disclosure. FIG. 3B includes an L1 data cache 106A part of the L1 cache 106, as well as more detail regarding the vector unit 110 and the vector registers 114. Specifically, the vector unit 110 may be a vector processing unit (VPU) (e.g., a vector arithmetic logic unit (ALU) 118) that executes one or more of integer, single-precision float, and double-precision float instructions. The VPU supports swizzling the register inputs with swizzle unit 120, numeric conversion with numeric convert units 122A and 122B, and replication with replication unit 124 on the memory input. The write mask registers 14 allow predicating resulting vector writes.

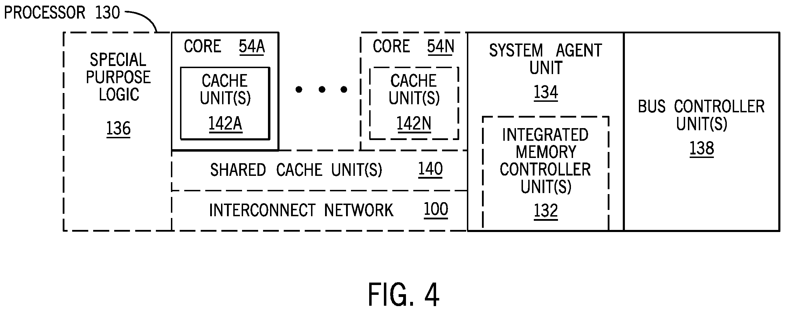

FIG. 4 is a block diagram of a processor 130 that may have more than one processor core 54, may have an integrated memory controller unit(s) 132, and may have integrated graphics according to embodiments of the disclosure. The solid lined boxes in FIG. 4 illustrate a processor 130 with a single core 54A, a system agent unit 134, a set of one or more bus controller unit(s) 138, while the optional addition of the dashed lined boxes illustrates the processor 130 with multiple cores 54A-N, a set of one or more integrated memory controller unit(s) 132 in the system agent unit 134, and a special purpose logic 136.

Thus, different implementations of the processor 130 may include: 1) a CPU with the special purpose logic 136 being integrated graphics and/or scientific (throughput) logic (which may include one or more cores), and the cores 54A-N being one or more general purpose cores (e.g., general purpose in-order cores, general purpose out-of-order cores, or a combination thereof); 2) a coprocessor with the cores 54A-N being a relatively large number of special purpose cores intended primarily for graphics and/or scientific (throughput); and 3) a coprocessor with the cores 54A-N being a relatively large number of general purpose in-order cores. Thus, the processor 130 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), an embedded processor, or the like. The processor 130 may be implemented on one or more chips. The processor 130 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 140, and external memory (not shown) coupled to the set of integrated memory controller unit(s) 132. The set of shared cache units 140 may include one or more mid-level caches, such as level 2 (L2), level 3 (L3), level 4 (L4), or other levels of cache, a last level cache (LLC), and/or combinations thereof. While a ring-based interconnect network 100 may interconnect the integrated graphics logic 136 (integrated graphics logic 136 is an example of and is also referred to herein as special purpose logic 136), the set of shared cache units 140, and/or the system agent unit 134/integrated memory controller unit(s) 132 may use any number of known techniques for interconnecting such units. For example, coherency may be maintained between one or more cache units 142A-N and cores 54A-N.

In some embodiments, one or more of the cores 54A-N are capable of multithreading. The system agent unit 134 includes those components coordinating and operating cores 54A-N. The system agent unit 134 may include, for example, a power control unit (PCU) and a display unit. The PCU may be or may include logic and components used to regulate the power state of the cores 54A-N and the integrated graphics logic 136. The display unit is used to drive one or more externally connected displays.

The cores 54A-N may be homogenous or heterogeneous in terms of architecture instruction set. That is, two or more of the cores 54A-N may be capable of execution of the same instruction set, while others may be capable of executing only a subset of a single instruction set or a different instruction set.

### Computer Architecture

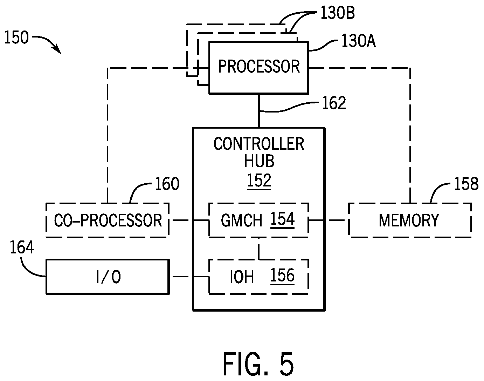

FIGS. 5-8 are block diagrams of embodiments of computer architectures. These architectures may be suitable for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices. In general, a wide variety of systems or electronic devices capable of incorporating the processor 130 and/or other execution logic.

Referring now to FIG. 5, shown is a block diagram of a system 150 in accordance with an embodiment. The system 150 may include one or more processors 130A, 130B that is coupled to a controller hub 152. The controller hub 152 may include a graphics memory controller hub (GMCH) 154 and an Input/Output Hub (IOH) 156 (which may be on separate chips); the GMCH 154 includes memory and graphics controllers to which are coupled memory 158 and a coprocessor 160; the IOH 156 couples input/output (I/O) devices 164 to the GMCH 154. Alternatively, one or both of the memory and graphics controllers are integrated within the processor 130 (as described herein), the memory 158 and the coprocessor 160 are coupled to (e.g., directly to) the processor 130A, and the controller hub 152 in a single chip with the IOH 156.

The optional nature of an additional processor 130B is denoted in FIG. 5 with broken lines. Each processor 130A, 130B may include one or more of the processor cores 54 described herein and may be some version of the processor 130.

The memory 158 may be, for example, dynamic random-access memory (DRAM), phase change memory (PCM), or a combination thereof. For at least one embodiment, the controller hub 152 communicates with the processor(s) 130A, 130B via a multi-drop bus, such as a frontside bus (FSB), point-to-point interface such as QuickPath Interconnect (QPI), or similar connection 162.

In one embodiment, the coprocessor 160 is a special-purpose processor, such as, for example, a high-throughput MIC processor, a network or communication processor, a compression engine, a graphics processor, a GPGPU, an embedded processor, or the like. In an embodiment, the controller hub 152 may include an integrated graphics accelerator.

There can be a variety of differences between the physical resources of the processors 130A, 130B in terms of a spectrum of metrics of merit including architectural, microarchitectural, thermal, power consumption characteristics, and the like.

In some embodiments, the processor 130A executes instructions that control data processing operations of a general type. Embedded within the instructions may be coprocessor instructions. The processor 130A recognizes these coprocessor instructions as being of a type that should be executed by the attached coprocessor 160. Accordingly, the processor 130A issues these coprocessor instructions (or control signals representing coprocessor instructions) on a coprocessor bus or other interconnect, to the coprocessor 160. The coprocessor 160 accepts and executes the received coprocessor instructions.

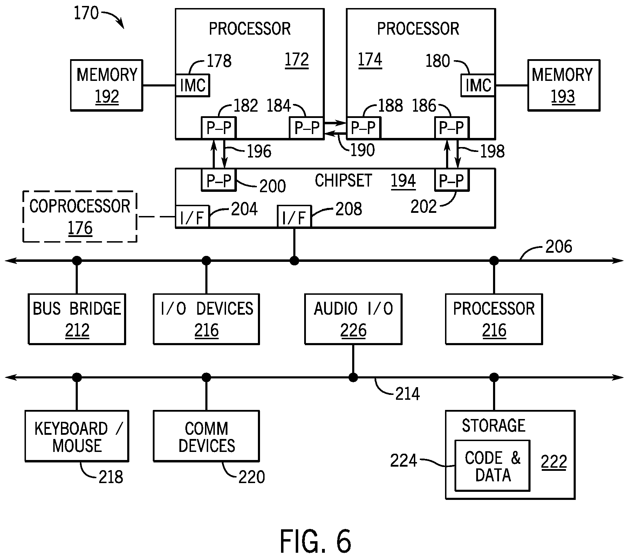

Referring now to FIG. 6, shown is a more detailed block diagram of a multiprocessor system 170 in accordance with an embodiment. As shown in FIG. 6, the multiprocessor system 170 is a point-to-point interconnect system, and includes a processor 172 and a processor 174 coupled via a point-to-point interface 190. Each of processors 172 and 174 may be some version of the processor 130. In one embodiment of the disclosure, processors 172 and 174 are respectively processors 130A and 130B, while coprocessor 176 is coprocessor 160. In another embodiment, processors 172 and 174 are respectively processor 130A and coprocessor 160.

Processors 172 and 174 are shown including integrated memory controller (IMC) units 178 and 180, respectively. The processor 172 also includes point-to-point (P-P) interfaces 182 and 184 as part of its bus controller units. Similarly, the processor 174 includes P-P interfaces 186 and 188. The processors 172, 174 may exchange information via a point-to-point interface 190 using P-P interfaces 184, 188. As shown in FIG. 6, IMCs 178 and 180 couple the processors to respective memories, namely a memory 192 and a memory 193 that may be different portions of main memory locally attached to the respective processors 172, 174.

Processors 172, 174 may each exchange information with a chipset 194 via individual P-P interfaces 196, 198 using point-to-point interfaces 182, 200, 186, 202.

Chipset 194 may optionally exchange information with the coprocessor 176 via a high-performance interface 204. In an embodiment, the coprocessor 176 is a special-purpose processor, such as, for example, a high-throughput MIC processor, a network or communication processor, a compression engine, a graphics processor, a GPGPU, an embedded processor, or the like.

A shared cache (not shown) may be included in either processor 172 or 174 or outside of both processors 172 or 174 that is connected with the processors 172, 174 via respective P-P interconnects such that either or both processors' local cache information may be stored in the shared cache if a respective processor is placed into a low power mode.

The chipset 194 may be coupled to a first bus 206 via an interface 208. In an embodiment, the first bus 206 may be a Peripheral Component Interconnect (PCI) bus or a bus such as a PCI Express bus or another third generation I/O interconnect bus, although the scope of the present disclosure is not so limited.

As shown in FIG. 6, various I/O devices 210 may be coupled to first bus 206, along with a bus bridge 212 that couples the first bus 206 to a second bus 214. In an embodiment, one or more additional processor(s) 216, such as coprocessors, high-throughput MIC processors, GPGPUs, accelerators (such as, e.g., graphics accelerators or digital signal processing (DSP) units), field programmable gate arrays, or any other processors, are coupled to the first bus 206. In an embodiment, the second bus 214 may be a low pin count (LPC) bus. Various devices may be coupled to the second bus 214 including, for example, a keyboard and/or mouse 218, communication devices 220 and a storage unit 222 such as a disk drive or other mass storage device which may include instructions/code and data 224, in an embodiment. Further, an audio I/O 226 may be coupled to the second bus 214. Note that other architectures may be deployed for the multiprocessor system 170. For example, instead of the point-to-point architecture of FIG. 6, the multiprocessor system 170 may implement a multi-drop bus or other such architectures.

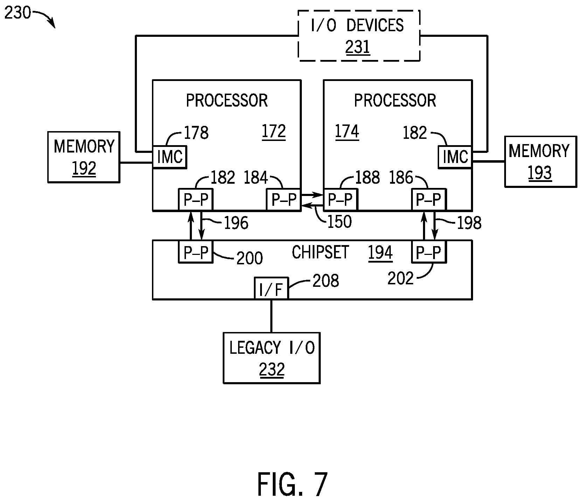

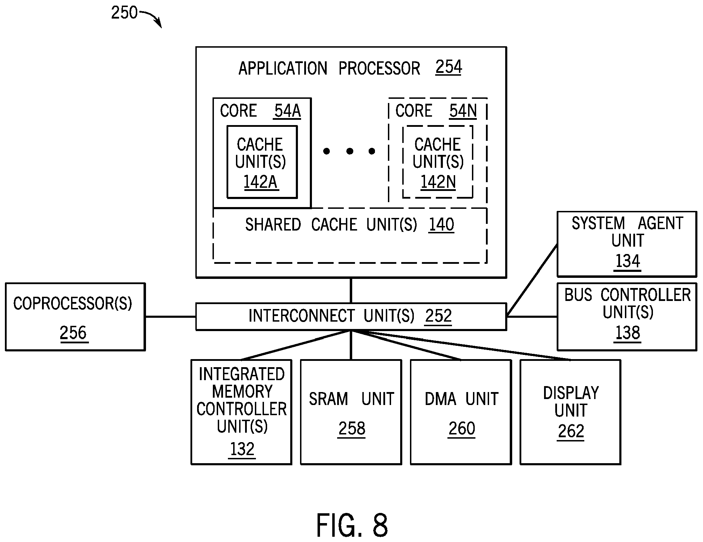

Referring now to FIG. 7, shown is a block diagram of a system 230 in accordance with an embodiment. Like elements in FIGS. 7 and 8 contain like reference numerals, and certain aspects of FIG. 6 have been omitted from FIG. 7 to avoid obscuring other aspects of FIG. 7.

FIG. 7 illustrates that the processors 172, 174 may include integrated memory and I/O control logic ("IMC") 178 and 180, respectively. Thus, the IMC 178, 180 include integrated memory controller units and include I/O control logic. FIG. 7 illustrates that not only are the memories 192, 193 coupled to the IMC 178, 180, but also that I/O devices 231 are also coupled to the IMC 178, 180. Legacy I/O devices 232 are coupled to the chipset 194 via interface 208.

Referring now to FIG. 8, shown is a block diagram of a SoC 250 in accordance with an embodiment. Similar elements in FIG. 4 have like reference numerals. Also, dashed lined boxes are optional features included in some SoCs 250. In FIG. 8, an interconnect unit(s) 252 is coupled to: an application processor 254 that includes a set of one or more cores 54A-N that includes cache units 142A-N, and shared cache unit(s) 140; a system agent unit 134; a bus controller unit(s) 138; an integrated memory controller unit(s) 132; a set or one or more coprocessors 256 that may include integrated graphics logic, an image processor, an audio processor, and/or a video processor; a static random access memory (SRAM) unit 258; a direct memory access (DMA) unit 260; and a display unit 262 to couple to one or more external displays. In an embodiment, the coprocessor(s) 256 include a special-purpose processor, such as, for example, a network or communication processor, a compression engine, a GPGPU, a high-throughput MIC processor, an embedded processor, or the like.

Embodiments of the mechanisms disclosed herein may be implemented in hardware, software, firmware, or a combination of such implementation approaches. Embodiments of the disclosure may be implemented as computer programs and/or program code executing on programmable systems including at least one processor, a storage system (including volatile and non-volatile memory and/or storage elements), at least one input device, and at least one output device.

Program code, such as data 224 illustrated in FIG. 6, may be applied to input instructions to perform the functions described herein and generate output information. The output information may be applied to one or more output devices. For purposes of this application, a processing system includes any system that has a processor, such as, for example, a digital signal processor (DSP), a microcontroller, an application-specific integrated circuit (ASIC), or a microprocessor.

The program code may be implemented in a high-level procedural or object-oriented programming language to communicate with a processing system. The program code may also be implemented in an assembly language or in a machine language. In fact, the mechanisms described herein are not limited in scope to any particular programming language. In any case, the language may be a compiled language or an interpreted language.

One or more aspects of at least one embodiment may be implemented by representative instructions stored on a machine-readable medium that represents various logic within the processor that, when read by a machine causes the machine to fabricate logic to perform the techniques described herein. Such representations, known as "IP cores," may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic cards, optical cards, or any other type of media suitable for storing electronic instructions.

Accordingly, embodiments of the embodiment include non-transitory, tangible machine-readable media containing instructions or containing design data, such as designs in Hardware Description Language (HDL) that may define structures, circuits, apparatuses, processors and/or system features described herein. Such embodiments may also be referred to as program products.

### Emulation

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert instructions to one or more other instructions to be processed by the core. The instruction converter may be implemented in software, hardware, firmware, or a combination thereof. The instruction converter may be implemented on processor, off processor, or part on and part off processor.

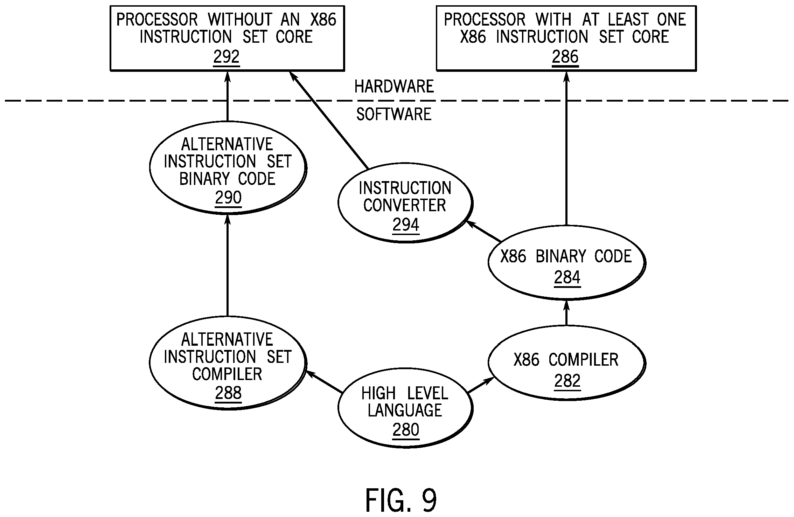

FIG. 9 is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or any combinations thereof. FIG. 9 shows a program in a high-level language 280 may be compiled using an x86 compiler 282 to generate x86 binary code 284 that may be natively executed by a processor with at least one x86 instruction set core 286. The processor with at least one x86 instruction set core 286 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 282 represents a compiler that is operable to generate x86 binary code 284 (e.g., object code) that can, with or without additional linkage processing, be executed on the processor with at least one x86 instruction set core 286.

Similarly, FIG. 9 shows the program in the high-level language 280 may be compiled using an alternative instruction set compiler 288 to generate alternative instruction set binary code 290 that may be natively executed by a processor without at least one x86 instruction set core 292 (e.g., a processor with processor cores 54 that execute the MIPS instruction set of MIPS Technologies of Sunnyvale, CA and/or that execute the ARM instruction set of ARM Holdings of Sunnyvale, CA). An instruction converter 294 is used to convert the x86 binary code 284 into code that may be natively executed by the processor without an x86 instruction set core 292. This converted code is not likely to be the same as the alternative instruction set binary code 290 because an instruction converter capable of this is difficult to make; however, the converted code may accomplish the general operation and be made up of instructions from the alternative instruction set. Thus, the instruction converter 294 represents software, firmware, hardware, or a combination thereof that, through emulation, simulation or any other process, allows a processor or other electronic device that does not have an x86 instruction set processor or core to execute the x86 binary code 284.

### Translation Lookaside Buffer (TLB)

As discussed above, an integrated circuit may retrieve memory for a variety of purposes (e.g., instruction data, user data). While the data is stored in a physical memory address representing an actual location in a memory device, software running on the integrated circuit may operate using a virtual memory address that is translated to the physical memory address when the memory is accessed. A structure on the integrated circuit known as a translation lookaside buffer (TLB) (e.g., the instruction TLB 66 or the data TLB 86) may reduce the time taken to access a memory location by storing recently used mappings of virtual memory addresses to their corresponding physical memory addresses. While the disclosure below refers specifically to the TLB 86, it should be appreciated that the architecture and methods relating to the TLB 86 may be used in any suitable TLB, which may include the TLB 66 or other TLBs. When data utilization circuitry (e.g., processing circuitry running software) requests access to a particular virtual memory address that was recently used and that is stored in the TLB, the TLB may rapidly translate the virtual memory address to its corresponding physical memory address.

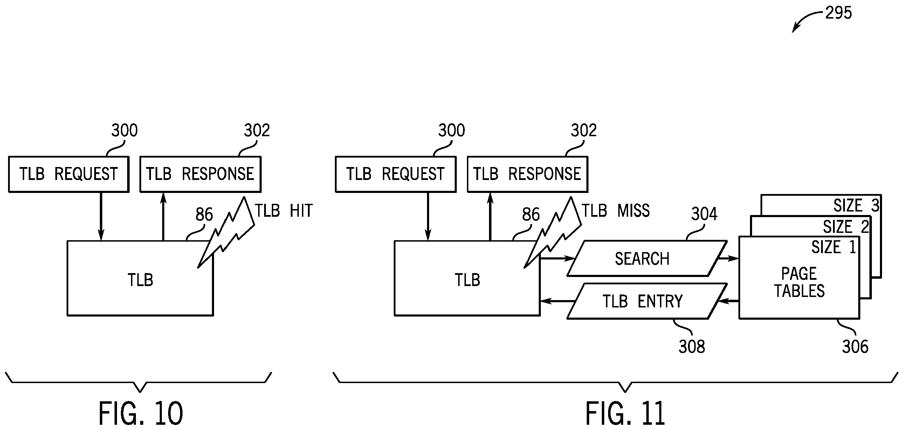

For example, as shown in FIG. 10, the TLB 86 may receive a TLB request 300 (e.g., a request that identifies a virtual memory address) that has a corresponding TLB entry in the TLB 86. This may be referred to as a "cache hit" or "TLB hit." The TLB 86 may respond with a TLB response 302 (e.g., identifying the physical address corresponding to the virtual memory address). When the TLB does not currently have a TLB entry corresponding to the TLB request 300 as shown in FIG. 11, however, this may be referred to as a "cache miss" or "TLB miss." A TLB miss handling process is used to obtain the corresponding TLB entry, including both address mapping and page size (e.g., a search 304 may be conducted through one or more page tables 306) to obtain a corresponding TLB entry 308. The TLB 86 may load the TLB entry 308 into the TLB and issue the TLB response 302.

The TLB 86 may reduce the likelihood of a TLB miss using a configurable sub-TLB that is configurable to hold different page size sets at different times after boot to complement a fixed sub-TLB that holds a fixed page size set after boot. As used herein, a page size set represents a set of page sizes (which could be a single page size (e.g., 4K, 2M, 1G) or two or more page sizes (e.g., 4K+2M, 2M+1G, 4K+1G, 4K+2M+1G)) that can be accommodated by a sub-TLB. As discussed below, the number of pages in a page size set used by a configurable sub-TLB may change during runtime (e.g., a configurable fully associative sub-TLB may be reconfigurable at different times during runtime to hold 1G TLB entries, 1G+2M, 1 G+4K, 1G+2M+4K).

As mentioned above, a fixed sub-TLB is a sub-TLB that may only hold one page size set after boot. Some fixed sub-TLBs may be fixed at design time, while others may be fixed at boot. In any case, a fixed sub-TLB may not be reconfigured dynamically after boot to hold a different page size set. In one example, a fixed sub-TLB may be a sub-TLB that is defined to hold a fixed page size set of 4K page size; during runtime, this fixed sub-TLB may hold 4K TLB entries but not 2M or 1G TLB entries. In another example, a fixed sub-TLB may be a sub-TLB that is defined to hold a fixed page size set of 4K and 2M page sizes; during runtime, this fixed sub-TLB may hold 4K and 2M TLB entries but not 1G TLB entries. In a further example, a fixed sub-TLB may be a sub-TLB that is defined to hold a page size set of 2M and 1G page sizes; during runtime, this fixed sub-TLB may hold 2M and 1G TLB entries, but not 4K TLB entries. Once the page size set to be used by the fixed sub-TLB is fixed (e.g., at design, at manufacture, at deployment in the field, at boot), the fixed sub-TLB may not hold TLB entries of a different page size than found in the fixed page size set.

By contrast, a configurable sub-TLB is a portion of a TLB that can be dynamically configured after boot to hold TLB entries of more than one page size set. In this way, the configurable sub-TLB may accommodate changing memory usage during operation. Examples of configurable sub-TLBs include a configurable set-associative sub-TLB or a configurable fully associative sub-TLB. A configurable set-associative sub-TLB may support TLB entries corresponding to one specific page size set of memory at any one time, but may be dynamically configured (e.g., configured initially or reconfigured from an initial configuration) after boot to change which page size set is held by the configurable set-associative sub-TLB (e.g., only 4K entries at a first time, only 2M entries at a second time, only 1G entries at a third time). Some configurable set-associative sub-TLBs may be configurable to hold multiple page sizes at any one time and which of those multiple page sizes is configured to be contained in the page size set may be dynamically configured after boot (e.g., 4K and 2M, 4K and 1G, 2M and 1G) as memory usage conditions change during operation. For example, a configurable fully-associative sub-TLB may support 4K/2M/1G pages at one time but then be reconfigured to support only 1G pages; or a 2-size set-associative configurable sub-TLB may be configured at one time to support 4K+1G pages and at another time to support 2M+1G pages. A configurable fully associative sub-TLB may support TLB entries corresponding to multiple specific page sizes of memory (e.g., 4K, 2M, and 1G). A configurable sub-TLB may provide additional flexibility for different use cases having different memory size usage but may involve more overhead than a fixed sub-TLB.

The difference between a fixed sub-TLB and a configurable sub-TLB may be further explained by the following example. Consider a fixed sub-TLB that may have 1536x entries that hold any mix of 4K and 2M pages. Such a sub-TLB may be considered a fixed sub-TLB because it can handle a fixed page size set consisting of 4K and 2M page sizes. This is "fixed" even though the sub-TLB may be able to handle a page size set of two page sizes. Note that 1536=1024+512. One "configurable" option would be to build two sub-TLBs, one handling a first page size set with 1024x fixed 4K+2M sizes, and a second handling a second page size set with 512x configurable entries that can be configured at different times to hold any two of the sizes (e.g., 4K+2M, 4K+1G, 2M+1G).

To reiterate, a sub-TLB may vary in (1) which size(s) it supports - possibly one page size, but possibly several page sizes, and (2) whether the supported set of page sizes is a fixed design-time (or, say, boot-time) choice, or whether it can be reconfigured/adjusted dynamically. The systems and methods of this disclosure may be contrasted with the structure of many TLBs (e.g., certain first-level TLBs (L1DTLBs)) that may use (1) fixed set-associative sub-TLBs that support only one size, and the size is selected at design time ("one size" makes it easier to meet circuit timing) or (2) fully-associative sub-TLBs that are small. These fully associative sub-TLBs may be single-size (as in many cases, which may use a 1GFA sub-TLB) or multi-size (as in many other cases, which support 4K/2M/1G in the FA TLB) but the size selection is fixed at design time, and they do not pair the all-size FA sub-TLB with another sub-TLB, so they do not have the problem/consideration of deciding which sub-TLB to use to fill an entry - the L1DTLB is only an 4K+2M+1GFA structure, so there is no other sub-TLB they can choose.

The systems and methods of this disclosure may also be contrasted with the structure of other TLBs, such as many second-level TLBs (L2TLB) that use fixed set-associative sub-TLBs that support two sizes, and the size is selected at design time. For many processors, there is an L2 sub-TLB that supports any mix of 4K+2M pages. "Two sizes" makes it harder to meet circuit timing (hence not used in L1TB), but can be more efficient because the all the entries can be used for any mix of the sizes. However, while this is multiple sizes, the sizes are selected at design time.

What is used in this disclosure is a sub-TLB that supports dynamically configurable page sizes. This side-steps some circuit design issues (e.g., building a fixed 2-size L2 sub-TLB may have some down-sides, building a fixed 3-size L2 sub-TLB may have even more down-sides). Using a configurable 2-size TLB lets us pick which 2 page sizes to support (so it is 3 sizes but only 2 at a time) which gives up some flexibility but is simpler/faster circuitry than a fixed 3-size sub-TLB. Consider an example in which a TLB of this disclosure has a fixed-configuration 2-size sub-TLB, a fixed-configuration 3-size sub-TLB, and a configurable 2-size sub-TLB that can be reconfigured among three sizes (but only two at one time). Here, it makes sense to think of this example's configurable sub-TLB as "2-size" because it only does 2 sizes for any one configuration, but also "3-size" because it can be re-configured among 3 page sizes (even though it can only support 2 page sizes in any given configuration). Note that, in some cases, the configurable sub-TLB may be the only sub-TLB that can hold some sizes - for example, the TLB may have a configurable fully associative sub-TLB that is the only place to hold 1G TLB entries. So in the case where there are many 1G TLB entries (or a high miss rate on 1G TLB entries), it is desirable to prevent 4K/2M mappings from evicting 1G mappings. Thus, in cases such as these, some page sizes may be treated as "special" under certain conditions (e.g., they may be marked as "sticky" as discussed further below).

The combination of a fixed sub-TLB and a configurable sub-TLB may allow size assignments to be made dynamically at run-time rather than at build-time. In this way, resources can be directed toward the page sizes with the highest miss rates. For example, if entries of 4K page sizes are most in demand, a configurable set-associative sub-TLB may be configured to hold entries of a page size set that includes a 4K page size (e.g., rather than 2M or 1G) or a configurable fully associative sub-TLB may accommodate more 4K TLB entries and fewer 2M or 1G TLB entries. In another example, a configurable set-associative sub-TLB While this disclosure provides many examples relating to dynamic allocation of entries of specific page sizes involving a configurable fully associative sub-TLB and one or more fixed set-associative sub-TLBs, it should be understood that any other suitable types of fixed or configurable sub-TLBs may be used. For example, configurable set-associative sub-TLBs may be used (e.g., in place of the fully associative sub-TLB or in place of one or more of the fixed set-associative sub-TLBs).

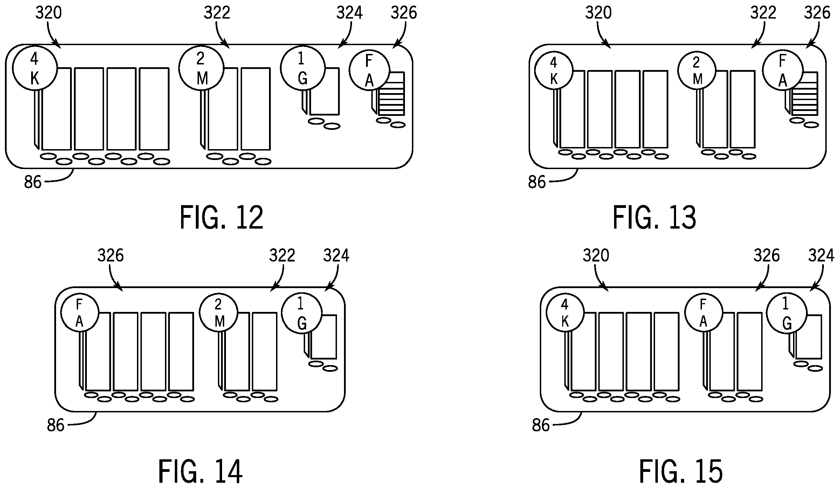

Several non-limiting examples of TLBs are shown in FIGS. 12-15, in which a configurable fully associative sub-TLB complements several fixed set-associative sub-TLBs. While much of the following disclosure provides examples relating to dynamic allocation of entries of specific page sizes using a configurable fully associative sub-TLB and one or more fixed set-associative sub-TLBs, it should be understood that a configurable set-associative sub-TLB may be used (e.g., in place of the configurable fully associative sub-TLB or in place of one or more of the fixed-page size fixed set-associative sub-TLBs). For example, a conventional TLB may be built with a fixed sub-TLB configured to hold 1G mappings. Newer hardware running older software might experience use cases where no 1G pages are ever used, and so it can be an advantage to instead build a configurable sub-TLB, and when no 1G pages are being used, it can be configured to hold all-4K or all-2M. Similarly, there may be three page sizes and four sub-TLBs, where one of the sub-TLBs is set-associative and configurable and "wanders" between page sizes to help out with whatever page size currently has the worst miss problem.

As a specific example, a TLB may use a fixed set-associative sub-TLB holding 4K and 2M mappings and a fully associative sub-TLB holding 1G mappings. The fully associative sub-TLB may be replaced with a 2-size fixed set-associative sub-TLB where the sizes can be reconfigured to some or all of: 4K-only, 2M-only, 1G-only, 4K+2M, 4K+1G, or 2M+1G. For example, if no 1G pages are in-use, it may be configured as 4K+2M; if 1G is in-use then it may be configured as 4K+1G or 2M+1G, depending on which page size is currently suffering the worst miss rate.

Turning to FIG. 12, the TLB 86 includes fixed set-associative sub-TLBs 320, 322, and 324 corresponding to three different memory page sizes. In the examples that will be discussed below, the fixed set-associative sub-TLBs 320, 322, and 324 may be respective fixed set-associative sub-TLBs that support respective page size sets of a single respective particular page size. Additionally or alternatively, the TLB 86 may use one or more fixed set-associative sub-TLBs that support a page size set that includes multiple page sizes (e.g., 4K+2M, 2M+1G, 4K+1G). Moreover, additionally or alternatively, one or more of the fixed set-associative sub-TLBs 320, 322, and 324 may be configurable set-associative sub-TLBs that can be changed (e.g., at a context switch or based on a count related to TLB misses for a particular page size) to support a different particular page size set at different times (e.g., all 1G at one time, all 4K at another time). Moreover, while these three memory page sizes are shown to be 4K, 2M, and 1G, it should be appreciated that any suitable page sizes (some of which may have corresponding fixed sub-TLBs and some or all of which may also be storable in a configurable sub-TLB) may be employed. In the example of FIG. 12, the fixed set-associative sub-TLBs 320, 322, and 324 are complemented by a configurable fully associative sub-TLB 326. The fixed set-associative sub-TLBs 320, 322, and 324 in this example support TLB entries corresponding to one specific page size of memory (e.g., 4K, 2M, or 1G). The configurable fully associative (FA) sub-TLB 326 may support TLB entries corresponding to several specific page sizes of memory (e.g., 4K, 2M, and 1G), but may involve more overhead than the fixed set-associative sub-TLBs 320, 322, and 324. In other words, the configurable fully associative (FA) sub-TLB 326 may support a page size set that is at least partially different from the respective page size sets supported by the fixed set-associative sub-TLB 320 (4K+2M+1G vs. 4K), the fixed set-associative sub-TLB 322 (4K+2M+1G vs. 2M) and the fixed set-associative sub-TLB 324 (4K+2M+1G vs. 1G).

Other combinations may also be used. For example, FIG. 13 illustrates an example TLB 86 that includes the configurable fully associative sub-TLB 326 and the fixed set-associative sub-TLBs 320 and 322. FIG. 14 illustrates an example TLB 86 that includes the configurable fully associative sub-TLB 326 and the fixed set-associative sub-TLBs 322 and 324. FIG. 15 illustrates an example TLB 86 that includes the configurable fully associative sub-TLB 326 and the fixed set-associative sub-TLBs 320 and 324. Other examples still may include more or fewer sub-TLBs complemented by the configurable fully associative sub-TLB 326.

Before continuing, it may be noted that the number of entries supported by the fixed set-associative sub-TLBs 320, 322, and 324 and the configurable fully associative sub-TLB 326 may vary. For instance, the sub-TLB 320 may hold more entries than the sub-TLB 322, and the sub-TLB 322 may hold more entries than the sub-TLB 324. Because the configurable fully associative sub-TLB 326 may involve more overhead (e.g., may take more die space due to the size of its TLB entries or the control circuitry involved in operating it), in some cases, the configurable fully associative sub-TLB 326 may hold fewer entries than the fixed set-associative sub-TLBs 320, 322, or 324. In examples where the configurable fully associative sub-TLB 326 takes the place of a fixed set-associative sub-TLBs 320, 322, or 324, the configurable fully associative sub-TLB 326 may have a size corresponding to that fixed set-associative sub-TLBs 320, 322, or 324. For example, the configurable fully associative sub-TLB 326 may be larger when taking the place of the fixed set-associative sub-TLB 320 than when taking the place of the set associative TLB 324. Moreover, these examples describe a TLB 86 in which the fixed set-associative sub-TLB 320 holds TLB entries corresponding to 4K memory page sizes, the fixed set-associative sub-TLB 322 holds TLB entries corresponding to 2M memory page sizes, the fixed set-associative sub-TLB 324 holds TLB entries corresponding to 1G memory page sizes, and the configurable fully associative sub-TLB 326 holds TLB entries corresponding to 4K, 2M, and 1G memory page sizes. However, it should be appreciated that any suitable memory page sizes, any suitable number of memory page sizes may be used, and any suitable page size sets may be respectively supported by the different sub-TLBs. For example, there may be additional or different fixed set-associative sub-TLBs beyond the sub-TLBs 320, 322, or 324. Moreover, the fully associative TLB 326 may hold TLB entries for page sizes not held by any other fixed set-associative sub-TLBs. In one example, the configurable fully associative sub-TLB 326 may hold TLB entries for 4KiB, 2MiB, 1GiB, and 512GiB page sizes.

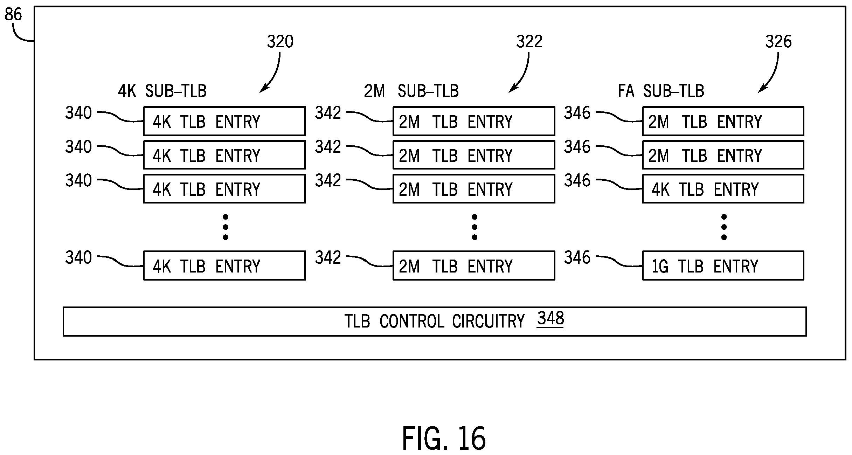

The examples below will describe a TLB 86 that includes the configurable fully associative sub-TLB 326 and the fixed set-associative sub-TLBs 320 and 322 (where the configurable fully associative sub-TLB 326 takes the place of the fixed set-associative sub-TLB 324). However, it should be appreciated that the systems and methods of this disclosure are not limited to this example, but may be used with any suitable arrangement. In the TLB 86 shown in FIG. 16, the fixed set-associative sub-TLB 320 holds 4K TLB entries 340, the fixed set-associative sub-TLB 322 holds 2M TLB entries 342, and the configurable fully associative sub-TLB 326 holds 4K TLB entries 340, 2M TLB entries 342, and 1G TLB entries 346. TLB control circuitry 348 may include any suitable circuitry, such as suitable state machine(s), that control the operation of the TLB 86. While the TLB control circuitry 348 is logically shown in one location on the TLB 86, it may be distributed across the various sub-TLBs 320, 322, and 326.

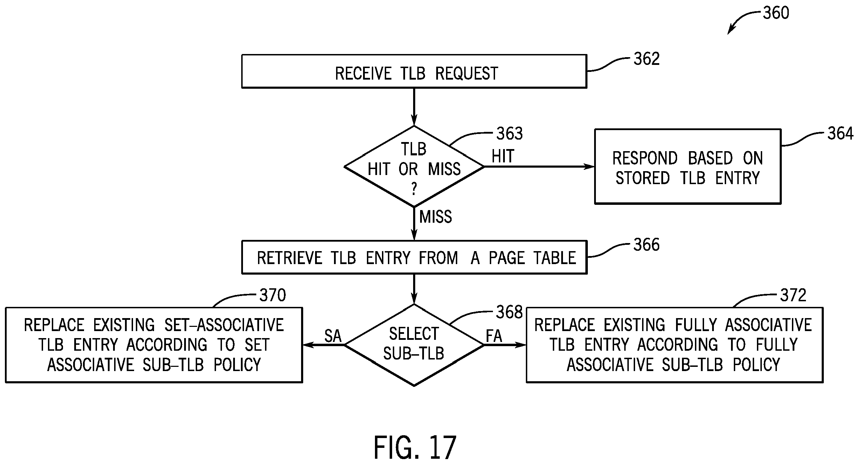

The new TLB entry will be subsequently stored in the TLB 86. To do so, an existing TLB entry is selected that will be "evicted" or "replaced" to make room for the new TLB entry. In a conventional TLB, the only replacement candidates are from a fixed sub-TLB associated with the indicated page size. To gain efficiencies from the configurable fully associative sub-TLB, new TLB entries may be selected to replace TLB entries from either a corresponding fixed set-associative sub-TLB or the configurable fully associative sub-TLB. One example is shown by a flowchart 360 of FIG. 17. A TLB request may be received (block 362). If there is a TLB entry corresponding to the TLB request (a "TLB hit") (decision block 363), the TLB may respond based on the stored TLB entry (block 364). If there is not a TLB entry corresponding to the TLB request (a "TLB miss") (decision 363), the TLB may retrieve the corresponding TLB entry from the appropriate page table (block 366). The TLB may select which sub-TLB in which to store the new TLB entry (decision 368) using any suitable criteria. Several examples will be discussed further below.

When a fixed set-associative (SA) sub-TLB corresponding to the memory page size of the TLB request is selected, the new TLB entry may replace an existing entry on the fixed set-associative sub-TLB based on the policy of that fixed set-associative sub-TLB (block 370). For example, the new TLB entry may replace an existing TLB entry on a least recently used (LRU) or pseudo least recently used (pLRU) scheme. When the configurable fully associative (FA) sub-TLB is selected, the new TLB entry may replace an existing entry based on the policy of the configurable fully associative sub-TLB (block 372). Several examples of these policies will also be discussed further below.

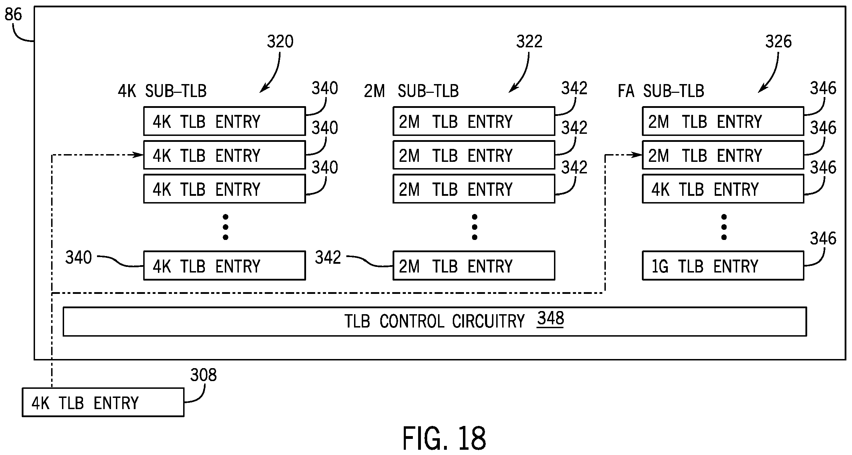

For example, as shown in FIG. 18, the fixed set-associative sub-TLB 320 holds 4K TLB entries 340, the fixed set-associative sub-TLB 322 holds 2M TLB entries 342, and the configurable fully associative sub-TLB 326 holds 4K TLB entries 340, 2M TLB entries 342, and 1G TLB entries 346. The TLB control circuitry 348 may choose to store a new TLB entry 308 (shown here as a 4K TLB entry) in the sub-TLB 320 or the configurable fully associative (FA) sub-TLB 326. If the sub-TLB 320 is selected, the new TLB entry 308 may replace an existing 4K TLB entry 340. If the configurable fully associative sub-TLB 320 is selected, the new TLB entry 308 may replace an existing TLB entry of the same or different page size.

### Selection of Fixed Sub-TLB or Configurable Sub-TLB

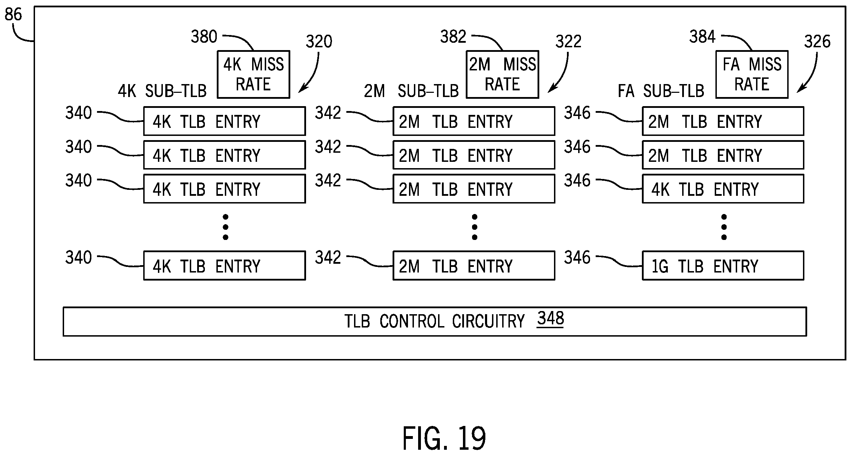

There may be many ways to select whether to store a new TLB entry in a corresponding fixed sub-TLB or in a configurable sub-TLB. These may be used separately or in combination. FIG. 19 illustrates one example in which miss rates of the various sub-TLBs are tracked and considered in the decision. Here, "miss rate" generally refers to the rate of recent misses - misses that happened some threshold amount of time ago (e.g., minutes or hours ago) may be ignored. In the TLB 86 shown in FIG. 19, the fixed set-associative sub-TLB 320 holds 4K TLB entries 340, the fixed set-associative sub-TLB 322 holds 2M TLB entries 342, and the configurable fully associative sub-TLB 326 holds 4K TLB entries 340, 2M TLB entries 342, and 1G TLB entries 346. The TLB 86 may track a 4K miss rate 380 representing a recent miss rate of the sub-TLB 320 and a 2M miss rate 382 representing a recent miss rate of the sub-TLB 322. Additionally or alternatively, the TLB 86 may also track an FA miss rate 384 representing a recent miss rate of the configurable fully associative (FA) sub-TLB 326. In one example, the miss rates 382, 384, and 386 may represent an exponential moving average (EMA). In some cases, the miss rates 382, 384, or 386 may instead approximate the exponential moving average, which may entail a lower hardware cost.

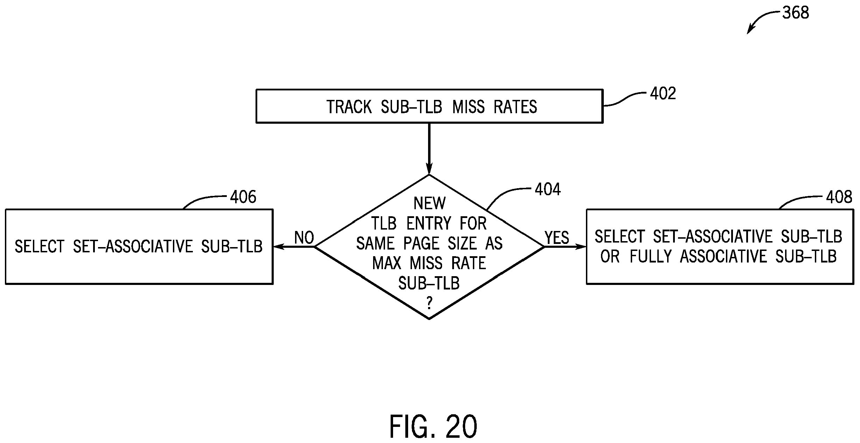

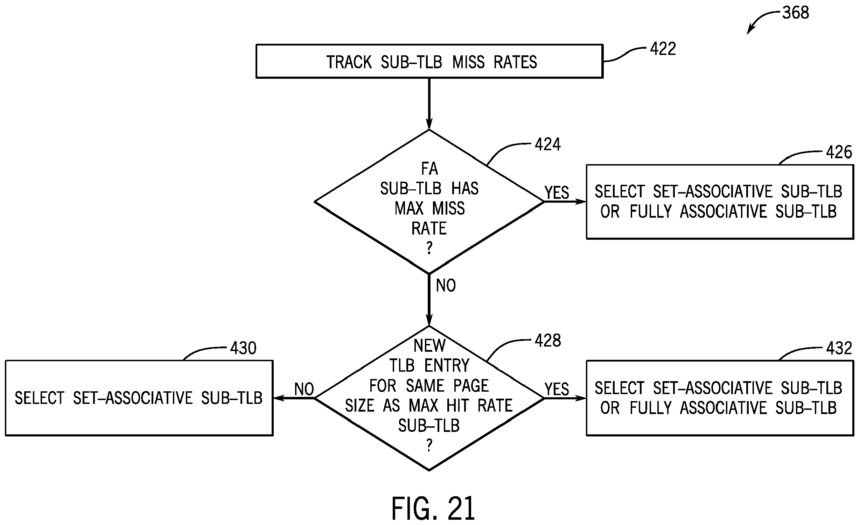

By tracking the miss rates of the sub-TLBs, the fully associative TLB may be reserved for TLB entries of page sizes currently experiencing the highest demand (e.g., 4K or 2M). FIGS. 20 and 21 represent example flowcharts corresponding to the decision 368 (illustrated in FIG. 17) to decide into which sub-TLB to store a new TLB entry. In FIG. 20, the decision 368 may involve tracking miss rates for the fixed set-associative sub-TLBs (block 402). If a new TLB entry does not correspond to the page size of the sub-TLB currently experiencing the highest miss rate (decision 404), the fixed set-associative sub-TLB associated with the page size of the new TLB may be selected (block 406). This effectively reduces competition for the configurable fully associative sub-TLB. That is, if the new TLB entry does correspond to the page size of the sub-TLB currently experiencing the highest miss rate (decision 404), either the configurable fully associative sub-TLB or the fixed set-associative sub-TLB associated with the page size of the new TLB may be selected (block 408).

In some cases, the miss rate of the configurable fully associative sub-TLB may be considered. For example, as shown in FIG. 21, the decision 368 may involve tracking miss rates for the fixed set-associative sub-TLBs and the configurable fully associative sub-TLB (block 422). When the configurable fully associative sub-TLB has the maximum miss rate (decision 424), either the configurable fully associative sub-TLB or the fixed set-associative sub-TLB associated with the page size of the new TLB may be selected (block 426). Otherwise, if a new TLB entry does not correspond to the page size of the sub-TLB currently experiencing the highest miss rate (decision 428), the fixed set-associative sub-TLB associated with the page size of the new TLB may be selected (block 430). If the new TLB entry does correspond to the page size of the sub-TLB currently experiencing the highest miss rate (decision 428), either the configurable fully associative sub-TLB or the fixed set-associative sub-TLB associated with the page size of the new TLB may be selected (block 432).

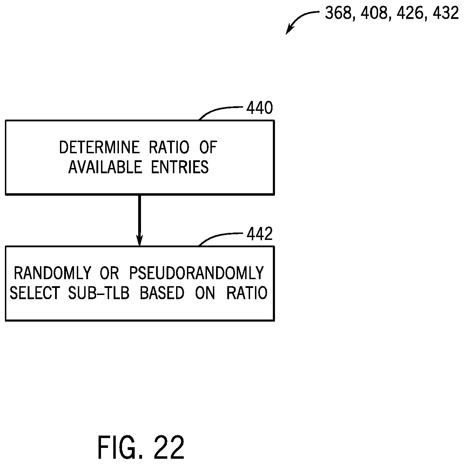

Additionally or alternatively, the TLB may select whether to store a new TLB entry in a fixed set-associative sub-TLB or the configurable fully associative sub-TLB depending on a ratio of the availability of entries between a corresponding fixed set-associative TLB and the configurable fully associative TLB. A flowchart of FIG. 22 may represent the operations of decision 368 and/or blocks 408, 426, or 432. A ratio of available entries between a corresponding fixed set-associative TLB and the configurable fully associative TLB may be determined (block 440) and the particular sub-TLB (the corresponding fixed set-associative sub-TLB or the configurable fully associative sub-TLB) may be randomly or pseduorandomly selected based on the ratio (block 442). This may be referred to as a "coin toss" approach.

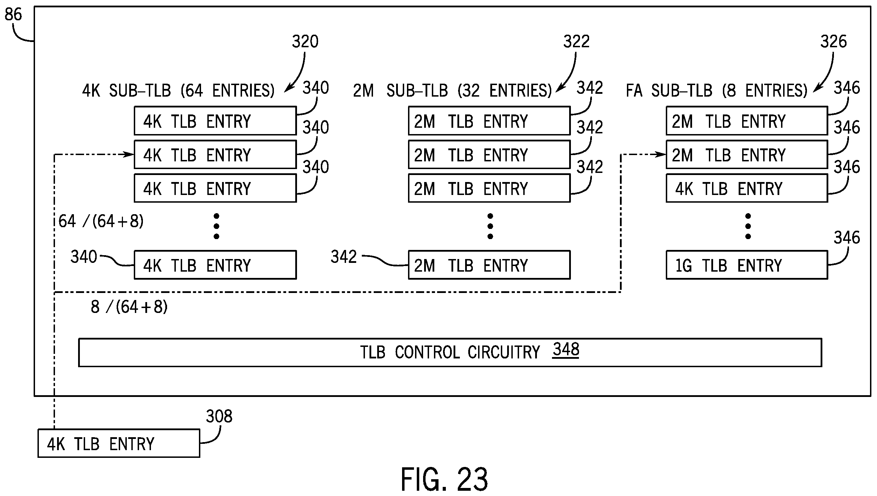

FIG. 23 provides an example. Here, the TLB 86 the 4K sub-TLB 320 can hold 64 4K TLB entries 340, the sub-TLB 322 can hold 32 2M TLB entries 342, and the configurable fully associative sub-TLB 326 can hold a total of 8 4K TLB entries 340, 2M TLB entries 342, and 1G TLB entries 346. Thus, when deciding where to store a new TLB entry 308 of 4K page size, the new TLB entry 308 may be pseudorandomly assigned to either the sub-TLB 320 or the configurable fully associative sub-TLB 326 in following proportion for this example: 64/(64+8) to the sub-TLB 320 and 8/(64+8) to the configurable fully associative sub-TLB 326.

Additionally or alternatively, the allocation to the configurable fully associative sub-TLB 326 may be less than 100%. In one example, the allocation of available entries in the configurable fully associative sub-TLB 326 may be divided among the fixed set-associative sub-TLBs 320 and 322 (e.g., 50% allocated to 4K and 50% allocated to 2M). In another example, discussed further below, some TLB entries of the fully associative TLB 326 may be marked as "sticky" for another page size and therefore unavailable. Dividing the assignment of the TLB entries of the configurable fully associative sub-TLB 326 may produce different results. For example, if the TLB entries of the configurable fully associative sub-TLB 326 are divided 50% to the 4K size and 50% to the 2M size, the proportion for assigning a new TLB entry of the 4K size may be 64/(64+4) to the sub-TLB 320 and 4/(64+4) to the configurable fully associative sub-TLB 326.

### Replacement Policy for Configurable Sub-TLB & "Sticky" Entries

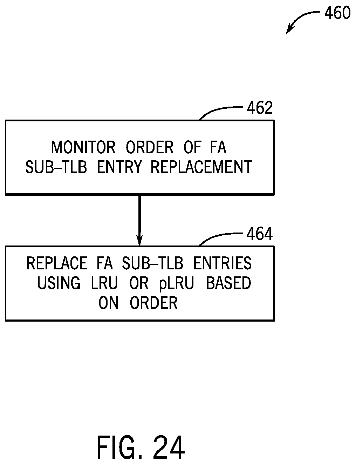

There may also be many ways to replace TLB entries in a configurable sub-TLB, and these, too may be used separately or in combination. In one example, as shown by a flowchart 460 of FIG. 24, the order in which new TLB entries are added to the configurable fully associative sub-TLB may be monitored (block 464). An existing TLB entry in the configurable fully associative sub-TLB may be replaced by a new TLB entry using least recently used (LRU) or pseudo least recently used (pLRU) based on the order (block 464).

Another example involves designating certain TLB entries or entry locations of the configurable fully associative sub-TLB as "sticky" and reserved for only TLB entries of a particular page size or sizes. Thus, a "sticky" TLB entry may only be replaced by a new TLB entry of the same "sticky" page size or sizes. For example, when the configurable fully associative sub-TLB takes the place of a 2M fixed set-associative sub-TLB and a 1G fixed set-associative sub-TLB, it may be desirable to prevent the 2M and 1G TLB entries from being dominated by 4K entries. In this example, marking 1G and 2M TLB entries as "sticky" may prevent a 4K entry (a "non-sticky" page size) from evicting either a 2M TLB entry or a 1G TLB entry. In another example, when the configurable fully associative sub-TLB takes the place of a 1G fixed set-associative sub-TLB, the 1G page size may be considered "sticky" and the 2M and 4K page sizes may be considered "non-sticky." In this example, marking 1G TLB entries as "sticky" may prevent 1G TLB entries from being evicted by 2M or 4K TLB entries. Additionally or alternatively, marking a TLB entry or entry location as "sticky" may prevent that TLB entry from being evicted by a new TLB entry regardless of page size.

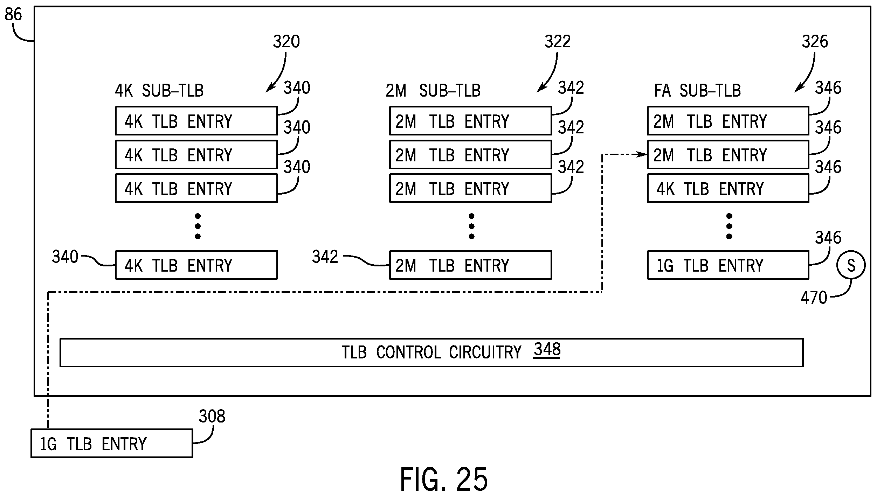

FIG. 25 illustrates an example of the TLB 86 where the TLB control circuitry 348 may set a "sticky" bit or bits 470 to reserve particular sub-TLB entries or entry locations for TLB entries of a particular page size. In the example of FIG. 25, the fixed set-associative sub-TLB 320 holds 4K TLB entries 340, the fixed set-associative sub-TLB 322 holds 2M TLB entries 342, and the configurable fully associative sub-TLB 326 holds 4K TLB entries 340, 2M TLB entries 342, and 1G TLB entries 346. In this example, since the 1G TLB entries 346 do not have a separate fixed set-associative sub-TLB designated for them, the sticky bit or bits 470 may be used to reserve sub-TLB entries of the configurable fully associative sub-TLB 326 for 1G TLB entries 346. In other examples, the sticky bit or bits 470 may be used to reserve sub-TLB entries of the configurable fully associative sub-TLB 326 for any entries associated with one or more other page sizes. For instance, when the configurable fully associative sub-TLB 326 takes the place of a different fixed set-associative sub-TLB 320 or 322 (e.g., as in FIGS. 14 or 15), entries associated with that page size may be reserved by the sticky bit or bits 470. In another example, the page size or sizes reserved by the sticky bit or bits 470 may be a certain page size or sizes in particular demand (e.g., as measured by miss rate or indicated by a register programmed based on instructions from an operating system).

The sticky bit or bits 470 may be implemented and used in a variety of ways. In one example, the sticky bit or bits 470 may be associated with every TLB entry, but only set under certain conditions (e.g., when a 1G TLB entry is stored in a particular TLB entry location). In another example, there may be just one global sticky bit. Once a particular page size (e.g., 1G) has been used in any TLB entry, the global sticky bit may cause the TLB not to let a TLB entry of a different page size (e.g., 4K or 2M) evict a TLB entry of the particular page size (e.g., 1G). In another example, there may be one sticky bit per page size. For instance, if 4K pages are a high-miss "problem" and 2M pages are not, then the sticky bit may prevent 2M pages from evicting anything but 2M pages, but may allow 4K pages to evict 2M pages.

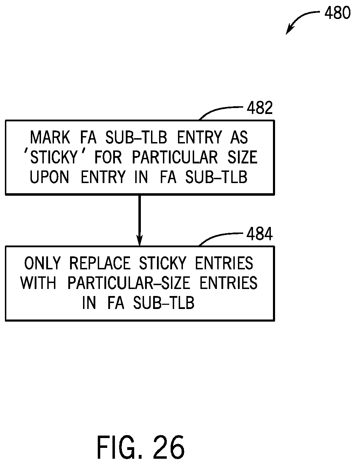

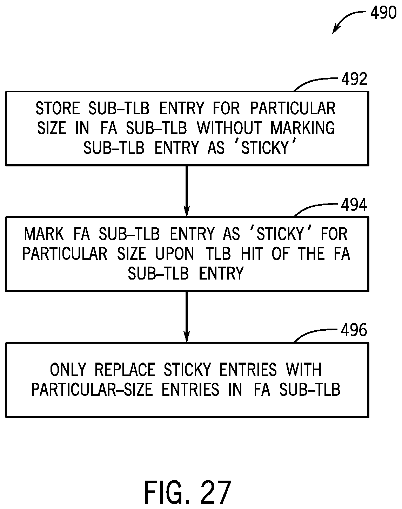

In some cases, as shown by a flowchart 480 of FIG. 26, when a new TLB entry 308 of a particular page size set is stored into the configurable fully associative sub-TLB 326 (block 482), it may be marked as "sticky" so that it will not be replaced by a TLB entry of a "non-sticky" page size set (e.g., where the "sticky" page size set is only 1G, a 1G TLB entry marked as sticky may only be replaced by a 1G TLB entry, but not a 4K or 2M TLB entry; where the "sticky" page size set is only 2M and 1G, a 2M or 1G TLB marked as sticky may only be replaced by a 2M or 1G TLB entry, but not a 4K TLB entry) (block 484). In another example, shown by a flowchart 490 of FIG. 27, when a new TLB entry 308 of the particular page size is stored into the configurable fully associative sub-TLB 326, it may not yet be marked as "sticky" (block 492). Thereafter, in response to a TLB hit for that TLB entry, that TLB entry may be marked as "sticky" (block 494) so that it will not be replaced by a TLB entry of a "non-sticky" page size set (block 496).

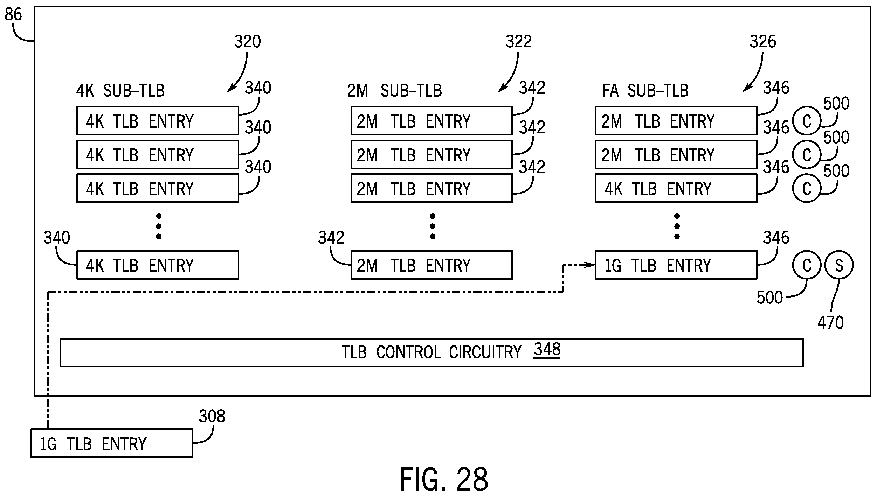

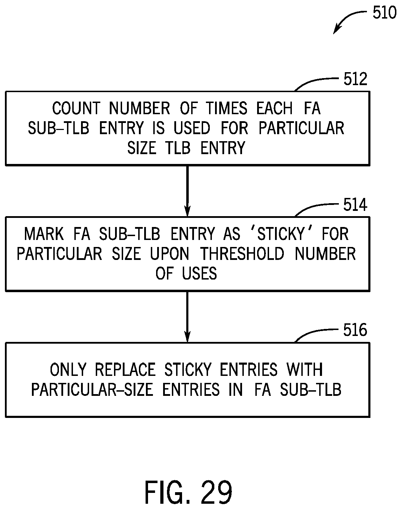

Certain TLB entries of the configurable fully associative sub-TLB may be marked as "sticky" based on a count relating to uses of specific entries of the TLB (e.g., a direct count of the uses, a count incremented every so many uses, some other proxy indication relating to the number of specific uses). FIG. 28 illustrates an example of the TLB 86 where the TLB control circuitry 348 may use counters 500 associated with TLB entry locations of the configurable fully associative sub-TLB 326. The "sticky" bit or bits 470 may be set to reserve particular sub-TLB entry locations for TLB entries a particular page size based on the counters 500 reaching a threshold value within some time period. For example, as shown by a flowchart 510 of FIG. 29, the number of times each fully associative sub-TLB entry location is used for TLB entries of a particular size or sizes (e.g., 4K, 2M, 1G, 2M or 1G, 4K or 2M, 4K or 1G) TLB entry may be counted (block 512). This may be thought of as a "per usage" counter that may count TLB entries of a single page size or several page sizes of interest. For instance, when the configurable fully associative sub-TLB takes the place of a 1G fixed set-associative sub-TLB, the number of times that a 1G TLB entry is stored may be counted (e.g., per-entry or globally). In another example, when the configurable fully associative sub-TLB takes the place of a 2M fixed set-associative sub-TLB and a 1G fixed set-associative sub-TLB, it may be desirable to prevent the 2M and 1G TLB entries from being dominated by 4K entries, and so the number of times that a 1G TLB entry or a 2M TLB entry is stored may be counted (e.g., per-entry or globally). In response to the count reaching a particular threshold number - for example, when a TLB entry location of the configurable fully associative sub-TLB is used to store a TLB entry of that page size or sizes some number of times - that sub-TLB entry location may be marked as "sticky" for that page size or sizes (block 514). Thereafter, a TLB entry in the entry location marked as "sticky" will not be replaced by a TLB entry of a "non-sticky" page size (block 516). For example, when the configurable fully associative sub-TLB takes the place of a 2M fixed set-associative sub-TLB and a 1G fixed set-associative sub-TLB, it may be desirable to prevent the 2M and 1G TLB entries from being dominated by 4K entries, and so the stick bit or bits may prevent a 4K entry from evicting either a 2M TLB entry or a 1G TLB entry.

In some cases, the "sticky" bit or bits and "counter" may be unified, for example a 3-bit counter that holds values 0..7 and where 0..6 indicates non-sticky and count-in-progress, while 7 indicates sticky.

While these examples have described stickiness per entry, the sticky bit or bits may define stickiness throughout the configurable fully associative sub-TLB. For instance, there may be a global "sticky" bit or bits for the configurable fully associative sub-TLB that may define whether any entries of a particular page size may be evicted. For example, setting a global "sticky" bit may cause all 1G TLB entries of the configurable fully associative sub-TLB to be unable to be evicted by 4K or 2M TLB entries. In another example, setting the global "sticky" bit may cause all 2M and 1G TLB entries to be unable to be evicted by 4K TLB entries.

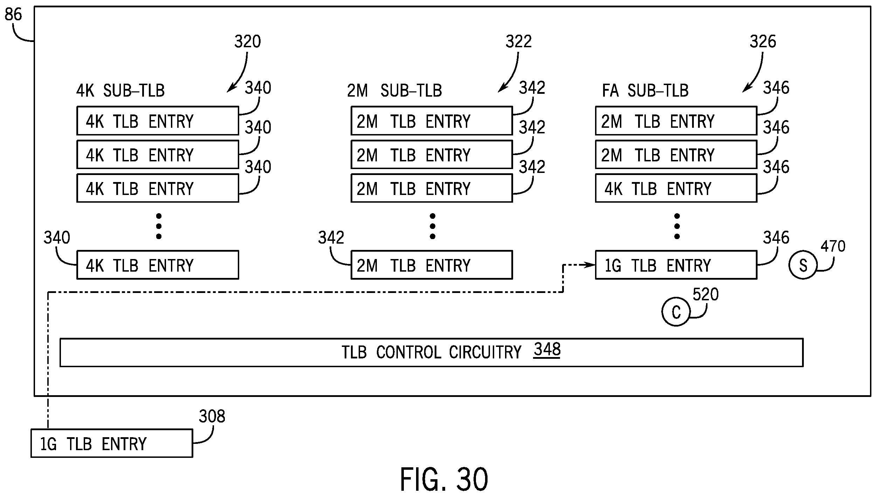

In some cases, whether to mark a TLB entry of the configurable fully associative sub-TLB as "sticky" may be determined based on a count of total uses of the configurable fully associative sub-TLB. FIG. 30 provides an example of the TLB 86 where the TLB control circuitry 348 may use a counter 520 to maintain a recent (e.g., within a few seconds, within a few minutes, within a few hours) count of all accesses to the configurable fully associative sub-TLB 326 of a particular page size. In some cases, the count by the counter 520 may include all accesses to the configurable fully associative sub-TLB 326 for all page sizes. In other cases, the count by the counter 520 may include all accesses to the configurable fully associative sub-TLB 326 for just a certain page size or sizes (e.g., the page size or sizes that will be marked as "sticky," such as 1G, 2M, or 4K). For instance, if the TLB has a 4K fixed set-associative sub-TLB and 2M+1G fully associative sub-TLB, then 2M and 1G TLB entries may "compete" for space - that is, the 2M and 1G TLB entries can replace each other. In this example, a 1G TLB entry can replace a "sticky" 2M TLB entry, but a 4K TLB entry cannot.

The counter 520 may be implemented in a variety of ways. In one example, the counter 520 may represent one counter to count TLB entries of all sizes except 1G in this example, since there is no other place to put 1G mappings, so it may be desirable to "bias" towards preferring 1G over not-1G. In another example, there may be one counter per page size. In a way, this approximates one counter per entry, but summarizes based on the page size. This improves on one counter in that the TLB can "give up" early for whatever size is not-a-problem and keep trying for whatever size is-a-problem.

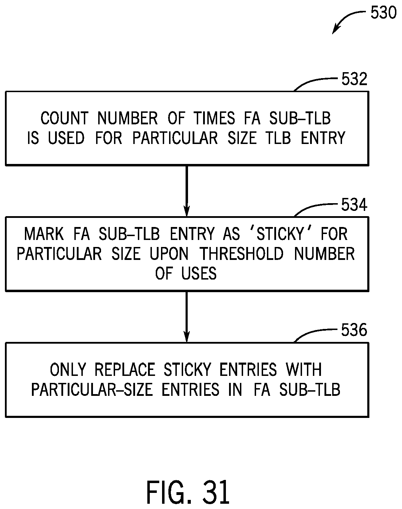

As provided by a flowchart 530 of FIG. 31, the count of the number of times the configurable fully associative sub-TLB is used for a particular page size or sizes may be maintained (block 532) and, in response to reaching a threshold number of recent uses of that page size or sizes, all TLB entries currently associated with that page size or sizes may be marked as "sticky" (block 534). Entries marked as "sticky" will not be replaced by a TLB entry of a "non-sticky" page size (block 536).

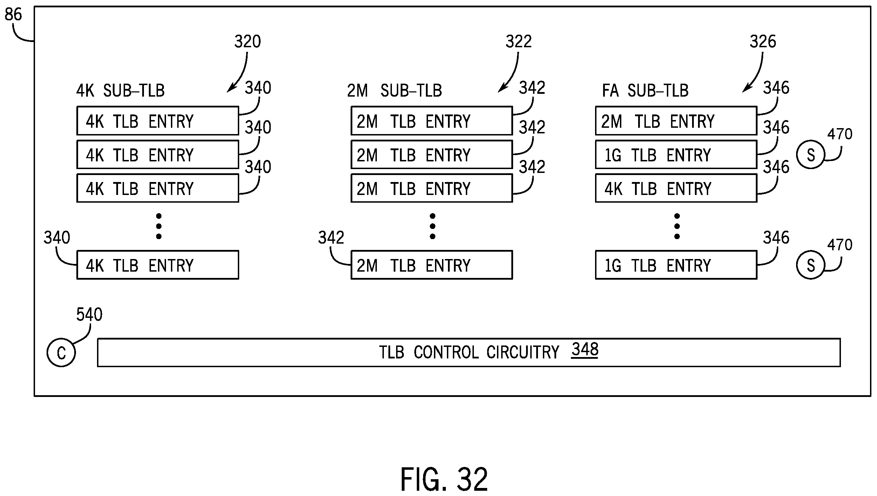

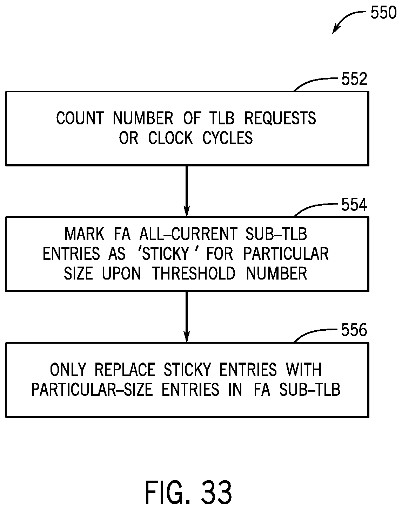

In some cases, whether to mark a TLB entry of the configurable fully associative sub-TLB as "sticky" may be determined based on a count of total uses of the TLB or a count of some number of clock cycles. For example, as shown in FIG. 32, the TLB control circuitry 348 of the TLB 86 may use a counter 540 to maintain a recent (e.g., within a few seconds, within a few minutes, within a few hours) count of all accesses to the TLB 86. In some examples, the counter 540 may count some number of clock cycles that have passed since a reset of the sticky bit or bits 470. In some cases, the count by the counter 540 may include all accesses to the sub-TLBs 320 and 322 other than the configurable fully associative sub-TLB 326. A flowchart 550 shown in FIG. 33 provides a method of using a counter such as the counter 540 to mark "sticky" TLB entries. The TLB may count the number of times the TLB was recently accessed or may count clock cycles (block 552). In response to reaching a threshold number of recent accesses, all TLB entries currently associated with a selected page size (e.g., 1G) may be marked as "sticky" (block 554). Entries marked as "sticky" subsequently will not be replaced by a TLB entry of a "non-sticky" page size (block 556).

### Resetting "Sticky" Bits

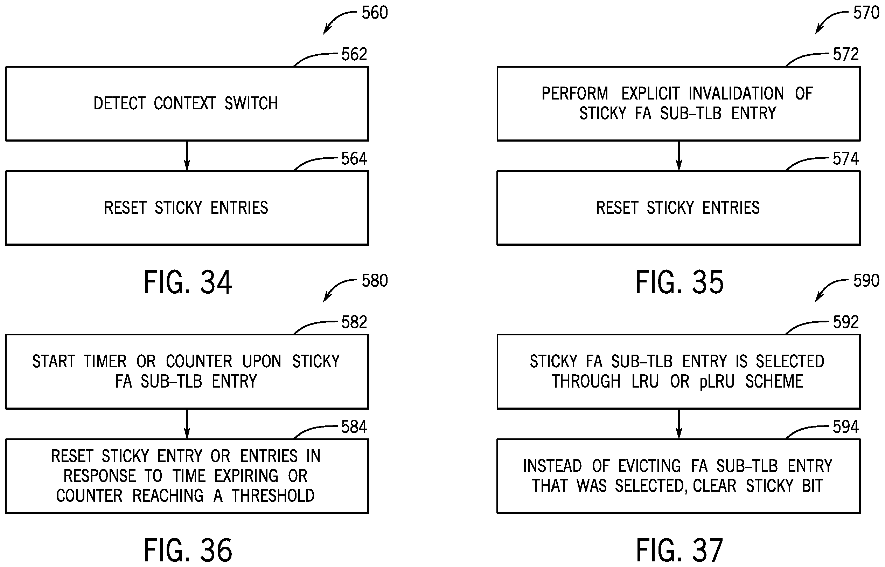

Although the use of "sticky" bits may prevent entries of certain page sizes (e.g., 1G) from being dominated by entries of other page sizes (e.g., 4K or 2M), over time, the number of sticky entries may dominate. Accordingly, the sticky bits may be reset from time to time. For example, as indicated by a flowchart 560 shown in FIG. 34, in response to a context switch by the integrated circuit (block 562), all or some of the sticky entries may be reset (block 564). A context switch may be detected by the TLB in any suitable way. For example, the TLB may detect a context switch by receiving an instruction from other circuitry of the integrated circuit, by detecting a change in a setting of a register in the TLB, or by detecting that some threshold number of consecutive TLB misses has occurred.

In another example shown in a flowchart 570 of FIG. 35, in response to performing an explicit invalidation of a TLB entry currently marked as "sticky" (block 572), all or some of the sticky entries may be reset (block 574). As shown in a flowchart 580 of FIG. 36, the "sticky" bits may be reset periodically. For example, a timer may be set or a counter may count clock cycles (block 582). In response to the timer expiring or the counter reaching a threshold number of clock cycles, all or some of the sticky entries may be reset (block 584).

Additionally or alternatively, a "second chance" scheme may be used. The "second chance" scheme may reset sticky bits after a particular "sticky" TLB entry is attempted to be reset some threshold number of times. For example, as shown in a flowchart 590 of FIG. 37, when determining whether to replace a particular TLB entry of the configurable fully associative sub-TLB, the entries marked as "sticky" may be included. If a TLB entry marked as "sticky" is selected (e.g., through least recently used (LRU) or pseudo least recently used (pLRU) or another eviction algorithm) (block 592), however, that entry may not be evicted. Rather, the "sticky" bit or bits may be decremented or cleared (block 594). In one example, the "sticky" bit or bits may be cleared the first time that the "sticky" TLB entry is selected for eviction, but the TLB entry may not be evicted and a different TLB entry may be evicted instead. In other examples, the "sticky" bit or bits may indicate a count by which some TLB entries may be marked "stickier" than others. Upon selection for eviction, the "sticky" bits may be decremented and only cleared after some threshold number of decrements.

### Data Structure of Fully Associative Sub-TLB Entries

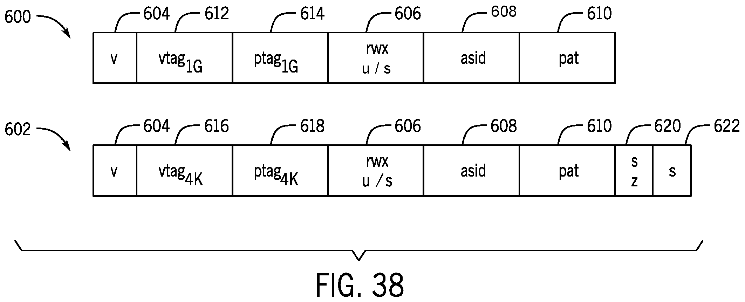

The TLB entries of the configurable fully associative sub-TLB may take any suitable data structure. One example appears in FIG. 38, which contrasts an example of a TLB entry structure 600 for a 1G sub-TLB and a TLB entry structure 602 for the configurable fully associative sub-TLB. Both may include a valid bit 604, permission bits (rwx u/s) 606, an address space identifier (asid) 608, and a physical attribute table (pat) 610. However, the TLB entry structure 600 for the 1G sub-TLB may have a smaller virtual memory address tag (vtag) 612 and a smaller physical memory address tag (ptag) 614. This is because the TLB entry structure 602 for the configurable fully associative sub-TLB may be sized to accommodate smaller page sizes. A smaller page has a smaller offset within the page. With a smaller page, the virtual address provides fewer address bits, and the physical tag therefore supplies more address bits. Thus, the TLB entry structure 602 for the configurable fully associative sub-TLB may have a virtual memory address tag (vtag) 616 and a physical memory address tag (ptag) 618 large enough to accommodate, for example, a 4K page size. When used for other page sizes (e.g., 2M or 1G), additional unused bits may be ignored.

The TLB entry structure 602 may also include a size state field (sz) 620, which may identify the page size of the TLB entry. For example, this field may be one bit wide when two page sizes are used in the configurable fully associative sub-TLB. When the TLB entry structure 602 accommodates any one of three page sizes (e.g., 4K, 2M, 1G), the field may be two or more bits wide. The size may also be indicated via some other mechanism. As an example, consider a 16-entry FA sub-TLB with an indicator [0..16] which says everything below the indicator is 1G; and everything at or above the indicator is 2M. In this example, filling a 1G mapping would increment the indictor and put the entry at the "new" location; while filling a 2M mapping would select from entries at or above the indicator.

As noted above, the TLB entry structure 602 may also include a sticky (s) field 622. The sticky field 622 may be a single bit (i.e., "sticky" or "not sticky") or may take up more than one bit to provide varying degrees of "stickiness" (e.g., which may be used in "second chance" resetting techniques, may define whether the entry location is sticky or just the currently stored TLB entry, or may be incremented upon a TLB hit and decremented upon a TLB miss). The TLB entry structure 602 may also have other fields not shown in FIG. 38. For example, there may be a counter field that can be updated in the manner of the counters 500 of FIG. 28. In some cases, the "sticky" and "counter" fields may be unified. For example, a 3-bit counter may hold values 0..7, where 0..6 indicates non-sticky and count-in-progress, while 7 indicates sticky.

### Experimental Results

The approach above was tested with a set of workload traces. The testing started with a standard trace library and involved selecting those traces which in cycle-accurate simulation spent 10% or more of wallclock time waiting for TLB misses, using a baseline TLB configuration similar to certain currently available processors. A functional (counting, but not cycle-accurate) simulator was modified to implement one version of the disclosed design. Notably, the 1 GiB sub-TLB was modified to accept all page sizes. The simulator implemented simple pseudo-random selection and a simple "sticky" implementation for 1G pages in the FA. (E.g., no miss rate tracking, no complicated "sticky" aging.) Three versions of the disclosed method were considered: (a) 4 KiB and 1 GiB page mappings in the FA array; (b) 2 MiB and 1 GiB page mappings in the FA array; and (c) all three page sizes in the FA array.

A functional simulator has no notion of time, so the metric MPKI or "misses per thousand instructions" was used to evaluate the approach. MPKI changes do not translate directly to performance changes - for any given workload, the size of the MPKI change may be more or less than the size of the performance change. However, MPKI improvements are typically associated with performance improvements.

For the configuration and workloads described above, we saw
- For the configurations above: (a) FA entries accepting 4 KiB and 1 GiB entries had about an 8% geomean MPKI improvement, (b) 2 MiB and 1 GiB had about a 2.5% geomean MPKI improvement, and (c) 4 KiB, 2 MiB, and 1 GiB together had about a 10% geomean MPKI improvement.
- There were specific workloads in each configuration that showed MPKI reductions near 30%. Most of the 2M+FA geomean improvement was due to a few large improvements, combined with most workloads having no improvement.
- There were no cases for any of the configurations where the MPKI got worse, either overall or for any sub-TLB.

The above is described in terms of a first-level data TLB, but other TLBs can use similar approaches. These may also include TLBs built entirely of fixed set-associative sub-TLBs (no fully-associative sub-TLBs) and TLBs that include one or more configurable set-associative sub-TLBs.

### Exemplification

An integrated circuit comprises a translation lookaside buffer (TLB) that comprises a first fixed sub-TLB that, during runtime, stores a first plurality of TLB entries corresponding to a first page size set; and a configurable sub-TLB that, during runtime, is configurable to store a second plurality of TLB entries of a second page size set that includes at least a first page size of the first page size set and includes at least a second page size not of the first page size set. The fixed sub-TLB comprises a first fixed set-associative sub-TLB that, during runtime, is configured to store the first plurality of TLB entries corresponding to the first page size set; the first page size set includes only a first page size. The TLB comprises a second fixed set-associative sub-TLB that, during runtime, is configured to store a third plurality of TLB entries corresponding to a third page size set; and the third page size set includes only a third page size. The second page size set includes the third page size. The TLB comprises control circuitry that monitor a first miss rate of the first set-associative TLB and a second miss rate of the second set-associative TLB. The control circuitry is configured to select whether to store a new TLB entry corresponding to the first page size in the first fixed set-associative sub-TLB or in the configurable sub-TLB based at least in part on whether the first miss rate is higher than the second miss rate.

For example, in the integrated circuit the configurable sub-TLB may be a configurable fully associative sub-TLB.

For example, in the integrated circuit the first page size of the first page size set may comprise a 4KiB page size and the second page size of the second page size set may comprise a 1 GiB page size.

For example, in the integrated circuit the second page size set may comprise a third page size, wherein the third page size may comprise a 2 MiB page size, and wherein the first page size set does not comprise the 1 GiB page size or the 2 MiB page size.

For example, in the integrated circuit the second page size set comprises at least one page size not supported by any other sub-TLBs of the TLB.

For example, in the integrated circuit the first fixed sub-TLB holds more TLB entries than the configurable sub-TLB.

For example, in the integrated circuit the TLB comprises control circuitry that selects whether to store a new TLB entry corresponding to the first page size set in the first fixed sub-TLB or in the configurable sub-TLB based at least in part on a ratio of available entries in the first fixed sub-TLB and the configurable sub-TLB.

For example, in the integrated circuit the first page size set comprises a page size of 4KiB, the second page size set comprises a page size of 1GiB, and the third page size set comprises a page size of 2MiB.

For example, in the integrated circuit the TLB comprises control circuitry that monitors a third miss rate of the configurable sub-TLB, and wherein the control circuitry is configured to select whether to store the new TLB entry corresponding to the first page size set in the first fixed set-associative sub-TLB or in the configurable sub-TLB based at least in part on whether the third miss rate is higher than the first miss rate and the second miss rate.

For example, the integrated circuit comprises a processor and the TLB operates as an instruction TLB for the processor.

For example, the integrated circuit comprises memory access circuitry and the TLB operates as a data TLB for the memory access circuitry.

For example, a method comprises tracking miss rates of a first sub-TLB and the second fixed sub-TLB; receiving, at a translation lookaside buffer (TLB), a TLB request that results in a TLB miss; retrieving, from a page table, a new TLB entry corresponding to the TLB request; and selecting between: replacing a first old TLB entry from a first fixed sub-TLB of the TLB with the new TLB entry; and replacing a second old TLB entry from a configurable sub-TLB of the TLB with the new TLB entry. The selecting is based at least in part on whether the first miss rate of the first fixed set-associative sub-TLB is higher than the second miss rate of the second fixed set-associative sub-TLB.

For example, in the method the selecting is based at least in part on a ratio of available entries in the first fixed sub-TLB and configurable sub-TLB.

For example, the entries in the configurable sub-TLB are not considered available if marked as "sticky" and therefore reserved for a different page size than the new TLB entry.

An exemplary method comprises receiving, at a translation lookaside buffer (TLB) that includes a first fixed sub-TLB corresponding to a first page size set and a configurable sub-TLB corresponding to the first page size set and a second page size set, a TLB request corresponding to the second page size set that results in a TLB miss; retrieving, from a page table, a new TLB entry corresponding to the TLB request; replacing an old TLB entry from the configurable sub-TLB with the new TLB entry; and identifying the new TLB entry in the configurable sub-TLB as "sticky" such that the new TLB entry is not evicted for replacement by another TLB entry that does not correspond to the second page size set.

For example, the new TLB entry is identified as "sticky" in response to being stored in the configurable sub-TLB and corresponding to the second page size set.

For example, before identifying the new TLB entry in the configurable sub-TLB as "sticky," at the TLB, a TLB request corresponding to the new TLB entry is received that results in a TLB hit, wherein the new TLB entry is identified as "sticky" in response to the TLB hit for the new TLB entry.

For example, the method comprises further maintaining a count relating to a number of times that an entry location of the configurable sub-TLB corresponding to the new TLB entry is used to store a TLB entry of the second page size set, wherein the new TLB entry is identified as "sticky" in response to the count exceeding a threshold number.

For example, the method comprises maintaining a count relating to a number of times that the configurable sub-TLB is used to store a TLB entry of the second page size set, wherein the new TLB entry is identified as "sticky" in response to the count exceeding a threshold number.

For example, the method comprises maintaining a first count relating to TLB requests received by the TLB or maintaining a second count relating to a number of clock cycles, wherein the new TLB entry is identified as "sticky" in response to the first count exceeding a first threshold or the second count exceeding a second threshold.

For example, the method comprises detecting a context switch; and in response to detecting the context switch, stopping identifying the new TLB entry as "sticky."

For example, the method comprises performing an explicit invalidation of the new TLB entry; and in response performing the invalidation of the new TLB entry, stopping identifying the new TLB entry as "sticky."

For example, the method comprises starting a timer or maintaining a count relating to clock cycles; and in response the timer expiring or the count exceeding a threshold, stopping identifying the new TLB entry as "sticky."

For example, the method comprises selecting the new TLB entry for eviction;_instead of evicting the new TLB entry, stopping identifying the new TLB entry as "sticky."

An exemplary integrated circuit device comprises a translation lookaside buffer (TLB) that comprises a configurable sub-TLB that stores a first entry comprising a virtual memory address field; a physical memory address field corresponding to the virtual memory address field; anda sticky field indicating whether the first entry is permitted to be evicted by a second entry based at least in part on a page size of the second entry in relation to the first entry.

For example, the sticky field comprises a single bit.

For example, the sticky field comprises multiple bits.

For example, the sticky field indicates a degree to which the first entry is permitted to be evicted by a second entry associated with a different page size than the page size indicated by the page size field.

For example, the first entry comprises a counter field configured to store a count related to a number of times that the first entry is used to store a virtual memory address or a physical memory address corresponding to a particular page size.

For example, the sticky field comprises a plurality of bits that store a count, wherein a value of the count indicates either "sticky" or "not sticky".

For example, the first entry comprises a page size field that indicates a page size associated with the virtual memory address field and the physical memory address field.

## Claims

1. An integrated circuit comprising a translation lookaside buffer, TLB (86), that comprises:
a first fixed set-associative sub-TLB (320) that is adapted to store, during runtime, a first plurality of TLB entries (340) corresponding to a first page size set, wherein the first page size set includes only a first page size, and wherein the fixed sub-TLB (320) is adapted to hold the first page size set fixed after boot;
a configurable sub-TLB (326) that is configurable to store, during runtime, a second plurality of TLB entries (340, 342, 346) of a second page size set, **characterized in that** the second page size set includes at least a first page size of the first page size set and includes at least a second page size not of the first page size set, wherein the configurable sub-TLB (326) is configurable to hold different page size sets at different times after boot;
a second fixed set-associative sub-TLB (322) that is configured to store, during runtime, a third plurality of TLB entries (342) corresponding to a third page size set wherein the second fixed set-associative sub-TLB (322) is adapted to hold the third page size set fixed after boot;
the third page size set includes only a third page size, wherein the second page size set includes the third page size, and wherein the TLB (86) further comprises:
control circuitry (348) that is adapted to monitor a first miss rate (380) of the first fixed set-associative TLB (320) and a second miss rate (382) of the second fixed set-associative TLB (322), and wherein the control circuitry (348) is configured to select whether to store a new TLB entry (308) corresponding to the first page size in the first fixed set-associative sub-TLB (320) or in the configurable sub-TLB (326) based at least in part on whether the first miss rate (380) is higher than the second miss rate (382).

2. The integrated circuit of claim 1, wherein the first page size of the first page size set comprises a 4KiB page size and the second page size of the second page size set comprises a 1 GiB page size.

3. The integrated circuit of claim 2, wherein the third page size comprises a 2 MiB page size.

4. The integrated circuit of any of the preceding claims, wherein the second page size set comprises at least one page size not supported by any other sub-TLBs of the TLB (86).

5. The integrated circuit of any of the preceding claims, wherein the first fixed set-associative sub-TLB (320) is adapted to hold more TLB entries than the configurable sub-TLB (326).

6. The integrated circuit of any of the preceding claims, wherein the control circuitry (348) is further adapted to select whether to store the new TLB entry (308) corresponding to the first page size set in the first fixed set-associative sub-TLB (320) or in the configurable sub-TLB (326) based at least in part on a ratio of available entries in the first fixed set-associative sub-TLB (320) and the configurable sub-TLB (326).

7. The integrated circuit of any of the preceding claims, wherein the control circuitry (348) is further adapted to monitor a third miss rate (384) of the configurable sub-TLB (326), and wherein the control circuitry (348) is configured to select whether to store the new TLB entry (308) corresponding to the first page size set in the first fixed set-associative sub-TLB (320) or in the configurable sub-TLB (326) based at least in part on whether the third miss rate (384) is higher than the first miss rate (380) and the second miss rate (382).

8. The integrated circuit of any of the preceding claims, wherein:
the integrated circuit comprises a processor and wherein the TLB (86) is adapted to operate as an instruction TLB for the processor; or
the integrated circuit comprises memory access circuitry and the TLB (86) is adapted to operate as a data TLB for the memory access circuitry.

9. A method for operating an integrated circuit according to claim 1, the method comprising:
tracking (402) miss rates (380, 382) of the first fixed set-associative sub-TLB (320) and the second fixed set-associative sub-TLB (322);
receiving (362), at the translation lookaside buffer, TLB, (86) of the integrated circuit, a TLB request that results in a TLB miss;
retrieving (366), from a page table, a new TLB entry (308) corresponding to the TLB request; and
selecting between:
replacing a first old TLB entry from the first fixed set-associative sub-TLB (320) of the TLB (86) with the new TLB entry; and
replacing a second old TLB entry from the configurable sub-TLB (326) of the TLB (86) with the new TLB entry, wherein the selecting based at least in part on whether the first miss rate (380) of the first fixed set-associative sub-TLB (320) is higher than the second miss rate (382) of the second fixed set-associative sub-TLB (322).

10. The method of claim 9, wherein the selecting is further based at least in part on a ratio of available entries in the first fixed set-associative sub-TLB (320) and the configurable sub-TLB (326).

11. The method of claim 10, wherein entries in the configurable sub-TLB (326) are not considered available if marked as "sticky" and therefore reserved for a different page size than the new TLB entry.

## Patentansprüche

1. Integrierte Schaltung, umfassend einen Übersetzungs-Lookaside-Puffer, TLB, (86), der umfasst:
einen ersten festen satzassoziativen Sub-TLB (320), der zum Speichern, während der Laufzeit, einer ersten Vielzahl von TLB-Einträgen (340) entsprechend einem ersten Seitengrößensatz angepasst ist, wobei der erste Seitengrößensatz nur eine erste Seitengröße einschließt und wobei der feste Sub-TLB (320) zum Fest-Halten des ersten Seitengrößensatzes nach dem Start angepasst ist;
einen konfigurierbaren Sub-TLB (326), der zum Speichern, während der Laufzeit, einer zweiten Vielzahl von TLB-Einträgen (340, 342, 346) eines zweiten Seitengrößensatzes konfigurierbar ist, **dadurch gekennzeichnet, dass** der zweite Seitengrößensatz mindestens eine erste Seitengröße des ersten Seitengrößensatzes einschließt und mindestens eine zweite Seitengröße nicht des ersten Seitengrößensatzes einschließt, wobei der konfigurierbare Sub-TLB (326) zum Halten verschiedener Seitengrößensätze zu verschiedenen Zeiten nach dem Start konfigurierbar ist;
einen zweiten festen satzassoziativen Sub-TLB (322), der zum Speichern, während der Laufzeit, einer dritten Vielzahl von TLB-Einträgen (342) entsprechend einem dritten Seitengrößensatz ausgelegt ist, wobei der zweite feste satzassoziative Sub-TLB (322) zum Fest-Halten des dritten Seitengrößensatzes nach dem Starten angepasst ist;
wobei der dritte Seitengrößensatz nur eine dritte Seitengröße einschließt, wobei der zweite Seitengrößensatz die dritte Seitengröße einschließt und
wobei der TLB (86) ferner umfasst:
Steuerschaltlogik (348), die zum Überwachen einer ersten Fehltrefferrate (380) des ersten festen satzassoziativen TLB (320) und einer zweiten Fehltrefferrate (382) des zweiten festen satzassoziativen TLB (322) angepasst ist, und wobei die Steuerschaltlogik (348) mindestens teilweise basierend darauf, ob die erste Fehltrefferrate (380) größer als die zweite Fehltrefferrate (382) ist, zum Auswählen, ob ein neuer TLB-Eintrag (308) entsprechend der ersten Seitengröße in dem ersten festen satzassoziativen Sub-TLB (320) oder in dem konfigurierbaren Sub-TLB (326) gespeichert werden soll, ausgelegt ist.

2. Integrierte Schaltung nach Anspruch 1, wobei die erste Seitengröße des ersten Seitengrößensatzes eine 4-KiB-Seitengröße umfasst und die zweite Seitengröße des zweiten Seitengrößensatzes eine 1-GiB-Seitengröße umfasst.

3. Integrierte Schaltung nach Anspruch 2, wobei die dritte Seitengröße eine 2-MiB-Seitengröße umfasst.

4. Integrierte Schaltung nach einem der vorhergehenden Ansprüche, wobei der zweite Seitengrößensatz mindestens eine Seitengröße umfasst, die nicht durch andere Sub-TLBs des TLB (86) unterstützt wird.

5. Integrierte Schaltung nach einem der vorhergehenden Ansprüche, wobei der erste feste satzassoziative Sub-TLB (320) zum Halten von mehr TLB-Einträgen als der konfigurierbare Sub-TLB (326) angepasst ist.

6. Integrierte Schaltung nach einem der vorhergehenden Ansprüche, wobei die Steuerschaltlogik (348) ferner mindestens teilweise basierend auf einem Verhältnis verfügbarer Einträge in dem ersten festen satzassoziativen Sub-TLB (320) und dem konfigurierbaren Sub-TLB (326) zum Auswählen, ob der neue TLB-Eintrag (308) entsprechend dem ersten Seitengrößensatz in dem ersten festen satzassoziativen Sub-TLB (320) oder in dem konfigurierbaren Sub-TLB (326) gespeichert werden soll, angepasst ist.

7. Integrierte Schaltung nach einem der vorhergehenden Ansprüche, wobei die Steuerschaltlogik (348) ferner zum Überwachen einer dritten Fehltrefferrate (384) des konfigurierbaren Sub-TLB (326) angepasst ist und wobei die Steuerschaltlogik (348) mindestens teilweise basierend darauf, ob die dritte Fehltrefferrate (384) größer als die erste Fehltrefferrate (380) und die zweite Fehltrefferrate (382) ist, zum Auswählen, ob der neue TLB-Eintrag (308) entsprechend dem ersten Seitengrößensatz in dem ersten festen satzassoziativen Sub-TLB (320) oder in dem konfigurierbaren Sub-TLB (326) gespeichert werden soll, ausgelegt ist.

8. Integrierte Schaltung nach einem der vorhergehenden Ansprüche, wobei:
die integrierte Schaltung einen Prozessor umfasst und wobei der TLB (86) zum Wirken als ein Anweisungs-TLB für den Prozessor angepasst ist; oder
die integrierte Schaltung eine Speicherzugriffsschaltlogik umfasst und der TLB (86) zum Wirken als ein Daten-TLB für die Speicherzugriffsschaltlogik angepasst ist.

9. Verfahren zum Betreiben einer integrierten Schaltung nach Anspruch 1, das Verfahren umfassend:
Nachverfolgen (402) von Fehltrefferraten (380, 382) des ersten festen satzassoziativen Sub-TLB (320) und des zweiten festen satzassoziativen Sub-TLB (322);
Empfangen (362), an dem Übersetzungs-Lookaside-Puffer, TLB, (86) der integrierten Schaltung, einer TLB-Anforderung, die in einem TLB-Fehltreffer resultiert;
Abrufen (366), aus einer Seitentabelle, eines neuen TLB-Eintrags (308) entsprechend der TLB-Anforderung und
Auswählen zwischen:
Ersetzen eines ersten alten TLB-Eintrags aus dem ersten festen satzassoziativen Sub-TLB (320) des TLB (86) durch den neuen TLB-Eintrag und
Ersetzen eines zweiten alten TLB-Eintrags aus dem konfigurierbaren Sub-TLB (326) des TLB (86) durch den neuen TLB-Eintrag, wobei das Auswählen mindestens teilweise darauf basiert, ob die erste Fehltrefferrate (380) des ersten festen satzassoziativen Sub-TLB (320) größer als die zweite Fehltrefferrate (382) des zweiten festen satzassoziativen Sub-TLB (322).

10. Verfahren nach Anspruch 9, wobei das Auswählen ferner mindestens teilweise auf einem Verhältnis verfügbarer Einträge in dem ersten festen satzassoziativen Sub-TLB (320) und dem konfigurierbaren Sub-TLB (326) basiert.

11. Verfahren nach Anspruch 10, wobei Einträge in dem konfigurierbaren Sub-TLB (326) nicht als verfügbar betrachtet werden, wenn sie als "haftend" gekennzeichnet sind und deshalb für eine andere Seitengröße als der neue TLB-Eintrag reserviert sind.

## Revendications

1. Circuit intégré comportant une mémoire cache de traduction d'adresses, TLB (86), qui comporte :
une première sous-TLB fixe (320) associative par ensembles qui est prévue pour stocker, pendant le temps d'exécution, une première pluralité d'entrées (340) de TLB correspondant à un premier ensemble de tailles de page, le premier ensemble de tailles de page ne comprenant qu'une première taille de page, et la sous-TLB fixe (320) étant prévue pour contenir le premier ensemble de tailles de page fixé après l'amorçage ;
une sous-TLB configurable (326) qui est configurable pour stocker, pendant le temps d'exécution, une deuxième pluralité d'entrées (340, 342, 346) de TLB d'un deuxième ensemble de tailles de page, **caractérisé en ce que** le deuxième ensemble de tailles de page comprend au moins une première taille de page du premier ensemble de tailles de page et comprend au moins une deuxième taille de page n'appartenant pas au premier ensemble de tailles de page, la sous-TLB configurable (326) étant configurable pour contenir différents ensembles de tailles de page à différents instants après l'amorçage ;
une deuxième sous-TLB fixe (322) associative par ensembles qui est configurée pour stocker, pendant le temps d'exécution, une troisième pluralité d'entrées (342) de TLB correspondant à un troisième ensemble de tailles de page, la deuxième sous-TLB fixe (322) associative par ensembles étant prévue pour contenir le troisième ensemble de tailles de page fixé après l'amorçage ;
le troisième ensemble de tailles de page ne comprenant qu'une troisième taille de page, le deuxième ensemble de tailles de page comprenant la troisième taille de page,
et la TLB (86) comportant en outre :
une circuiterie (348) de commande qui est prévue pour surveiller un premier taux (380) de requêtes non satisfaites de la première TLB fixe (320) associative par ensembles et un deuxième taux (382) de requêtes non satisfaites de la deuxième TLB fixe (322) associative par ensembles, et la circuiterie (348) de commande étant configurée pour choisir s'il convient de stocker une nouvelle entrée (308) de TLB correspondant à la première taille de page dans la première sous-TLB fixe (320) associative par ensembles ou dans la sous-TLB configurable (326) en se basant au moins en partie sur le fait que le premier taux (380) de requêtes non satisfaites soit ou non supérieur au deuxième taux (382) de requêtes non satisfaites.

2. Circuit intégré selon la revendication 1, la première taille de page du premier ensemble de tailles de page comportant une taille de page de 4KiB et la deuxième taille de page du deuxième ensemble de tailles de page comportant une taille de page de 1 GiB.

3. Circuit intégré selon la revendication 2, la troisième taille de page comportant une taille de page de 2 MiB.

4. Circuit intégré selon l'une quelconque des revendications précédentes, le deuxième ensemble de tailles de page comportant au moins une taille de page qui n'est prise en charge par aucune autre sous-TLB des TLB (86).

5. Circuit intégré selon l'une quelconque des revendications précédentes, la première sous-TLB fixe (320) associative par ensembles étant prévue pour contenir plus d'entrées de TLB que la sous-TLB configurable (326).

6. Circuit intégré selon l'une quelconque des revendications précédentes, la circuiterie (348) de commande étant en outre prévue pour choisir s'il convient de stocker la nouvelle entrée (308) de TLB correspondant au premier ensemble de tailles de page dans la première sous-TLB fixe (320) associative par ensembles ou dans la sous-TLB configurable (326) en se basant au moins en partie sur un rapport d'entrées disponibles dans la première sous-TLB fixe (320) associative par ensembles et la sous-TLB configurable (326).

7. Circuit intégré selon l'une quelconque des revendications précédentes, la circuiterie (348) de commande étant en outre prévue pour surveiller un troisième taux (384) de requêtes non satisfaites de la sous-TLB configurable (326), et la circuiterie (348) de commande étant configurée pour choisir s'il convient de stocker la nouvelle entrée (308) de TLB correspondant au premier ensemble de tailles de page dans la première sous-TLB fixe (320) associative par ensembles ou dans la sous-TLB configurable (326) en se basant au moins en partie sur le fait que le troisième taux (384) de requêtes non satisfaites soit ou non supérieur au premier taux (380) de requêtes non satisfaites et au deuxième taux (382) de requêtes non satisfaites.

8. Circuit intégré selon l'une quelconque des revendications précédentes :
le circuit intégré comportant un processeur et la TLB (86) étant prévue pour fonctionner comme une TLB d'instructions pour le processeur ; ou
le circuit intégré comportant une circuiterie d'accès à une mémoire et la TLB (86) étant prévue pour fonctionner comme une TLB de données pour la circuiterie d'accès à la mémoire.

9. Procédé d'exploitation d'un circuit intégré selon la revendication 1, le procédé comportant les étapes consistant à :
suivre (402) des taux (380, 382) de requêtes non satisfaites de la première sous-TLB fixe (320) associative par ensembles et de la deuxième sous-TLB fixe (322) associative par ensembles ;
recevoir (362), au niveau de la mémoire cache de traduction d'adresses, TLB, (86) du circuit intégré, une requête de TLB qui se traduit par une requête non satisfaite de TLB ;
extraire (366), d'une table de pages, une nouvelle entrée (308) de TLB correspondant à la requête de TLB ; et choisir entre :
le remplacement d'une première ancienne entrée de TLB issue de la première sous-TLB fixe (320) associative par ensembles de la TLB (86) par la nouvelle entrée de TLB ; et
le remplacement d'une deuxième ancienne entrée de TLB issue de la sous-TLB configurable (326) de la TLB (86) par la nouvelle entrée de TLB, le choix étant basé au moins en partie sur le fait que le premier taux (380) de requêtes non satisfaites de la première sous-TLB fixe (320) associative par ensembles soit ou non supérieur au deuxième taux (382) de requêtes non satisfaites de la deuxième sous-TLB fixe (322) associative par ensembles.

10. Procédé selon la revendication 9, le choix étant en outre basé au moins en partie sur un rapport d'entrées disponibles dans la première sous-TLB fixe (320) associative par ensembles et la sous-TLB configurable (326) .

11. Procédé selon la revendication 10, des entrées dans la sous-TLB configurable (326) n'étant pas considérées comme disponibles si elles sont marquées comme "collantes" et par conséquent réservées pour une taille de page différente de celle de la nouvelle entrée de TLB.
